# FASCICULE DE BREVET EUROPEEN

(11) **EP 0 487 400 B1**
(45) Date de publication et mention de la délivrance du brevet: **05.06.1996**
(21) Numéro de dépôt: 91403100.0
(22) Date de dépôt: 18.11.1991
(51) Int. Cl.: G09G 1/16

(54) **Architecture de terminal et circuit de gestion**
Bauweise eines Terminals und Verwaltungsschaltung
Terminal architecture and control circuit

(30) Priorité: 19.11.1990 FR 9014366
(43) Date de publication de la demande: 27.05.1992
(73) Titulaire: BULL S.A., F-92800 Puteaux (FR)
(72) Inventeur: Rongione, Eric, F-94320 Thiais (FR)
(74) Mandataire: Colombe, Michel

(56) Documents cités:
- EP-A- 0 080 043
- EP-A- 0 259 827
- EP-A- 0 283 579
- IBM TECHNICAL DISCLOSURE BULLETIN vol. 26, no. 4, Septembre 1983, NEW YORK (US) pages 2156 - 2158; G.J.BARNETT ET AL.: 'Direct Extraction of Data from the Refresh Buffer of a Display'* page 2157, ligne 10 - ligne 29; figure 1 *.
- PATENT ABSTRACTS OF JAPAN vol. 13, no. 162 (P-859) 19 Avril 1989 &JP-A-64 001 033 ( TOSHIBA CORP. ) 5 Janvier 1989. * le document en entier *.

## Description

La présente invention concerne une architecture de terminal et le circuit de gestion associé.

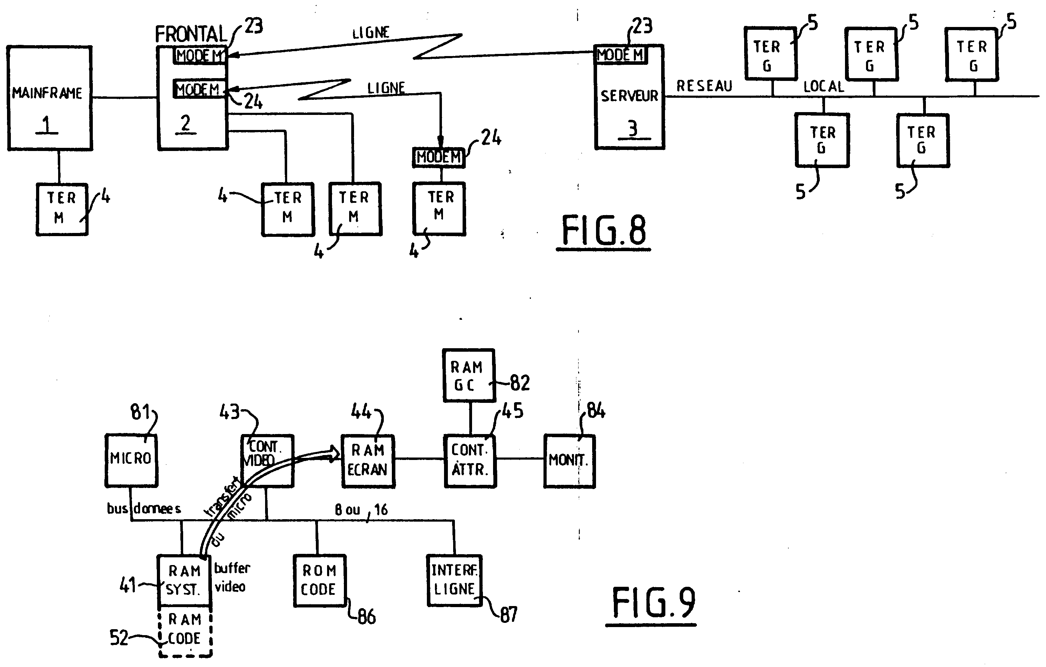

La plupart des fabricants de systèmes informatiques centraux (mainframe) disposent de deux types de terminaux alphanumériques : les terminaux G (5) (figure 8) disposés en grappe sur un réseau local relié par un serveur (3) à un frontal (2) le plus souvent (proprietary) issus d'une expérience acquise avant l'élaboration de la plupart des standards de réseaux locaux et géré par un concentrateur de données, et les terminaux monoconsoles M (4) connectés à des systèmes (1), soit directement sur un même site, soit à travers des modems (24). Les différences essentielles en matière d'électronique sont ainsi les modules de communication et également les tailles des mémoires RAM et ROM présentes sur la carte logique gérée par microprocesseur. Pour des terminaux produits en grandes quantités, les différentes architectures ont un impact non négligeable sur le coût global du terminal ; et le choix de mémoires standards commercialisées par de multiples fabricants de par le monde est un des axes principaux guidant l'architecture. Le module vidéo contrôlant l'affichage du terminal dispose en général de RAM dont la capacité s'accroît en fonction des tailles de mémoire nécessaire aux multiples protocoles de présentation des différentes émulations de terminaux disponibles au catalogue du constructeur. De plus, la qualité d'affichage demandée par les utilisateurs implique la construction de terminaux dont la fréquence de balayage ligne voisine 32 KHz et dont la fréquence de rafraîchissement de l'écran est au-deçà de 70 Hz. La conséquence est l'augmentation de la fréquence caractère et la diminution des temps d'accès aux mémoires d'affichage. Ainsi, les fréquences caractère pour afficher 80 colonnes ou 132 colonnes atteignent respectivement 3,5 et 6 MHz.

Dans les terminaux, une image standard de 25 rangées de 80 colonnes est décrite en mémoire vidéo par 25 fois 80 mots de 16 bits ; ces 16 bits se composent en général du code ASCII sur 7 ou 8 bits et des attributs sur 8 bits de chaque caractère permettant d'obtenir les rendus visuels associés à chaque attribut de caractère, par exemple 'souligné', 'clignotant', 'inversion vidéo'... L'association du code et de l'attribut représente 15 à 16 bits et sera par la suite appelée le CODATT du caractère donné. Une telle image nécessite 25 x 80 x 2 octets = 4 Koctets de RAM pour la mémoire video ; de la même manière, pour 132 colonnes, on a besoin de 25 x 132 x 2 = 6,6 Koctets, et pour une image de 43 rangées de 132 colonnes : 11,4 Koctets ou 5,7 Kmots de 16 bits. Cette image représente tous les caractères que l'on peut visualiser simultanément sur un écran ; cette image est donc la représentation de tout ou partie du tampon (buffer) image stockée en memoire centrale (ou mémoire système du microprocesseur) et est constituée par les caractères envoyés par l'unité centrale et reçus par le terminal ; ces caractères s'accumulent dans le tampon (buffer) ligne 87, (figure 9) avant d'être traités par le microprocesseur et envoyés dans le tampon (buffer) image (41) ; enfin, le processus de visualisation transfère à son tour ces caractères du tampon (buffer) image (41) vers la mémoire d'écran (44). Ainsi, on est conduit à recevoir des images successives qu'on affiche soit en mode bloc : 25 rangées mise à jour à la fois, soit en mode défilement continu : la première rangée est effacée, les 24 rangées suivantes montent d'une position et la dernière rangée seulement est remplacée par la nouvelle rangée. Par conséquent, dans le cas de défilement d'images successives sur l'écran, on est conduit à recharger chaque image issue de la mémoire vidéo (41) dans la mémoire d'écran (44) (figure 9). Une bonne vitesse de mise à jour de l'écran entraîne une bonne ergonomie d'affichage pour l'utilisateur. On parvient à ce niveau de qualité quand on a un débit supérieur de 50000 nouveaux caractères par seconde pour les applications tournant sur les types de terminaux cités précèdemment. L'ergonomie d'affichage associée aux différentes présentations implique la prise en compte de fonctionnalités telles que le défilement lent dans des bandeaux ('tranches' d'écran horizontales). Dans tous les cas étudiés par la suite, on fait référence au mode 132 colonnes qui est le plus pénalisant en terme de vitesse ; il impacte donc davantage l'architecture et entraîne le plus souvent le choix de mémoires plus rapides et donc plus chères.

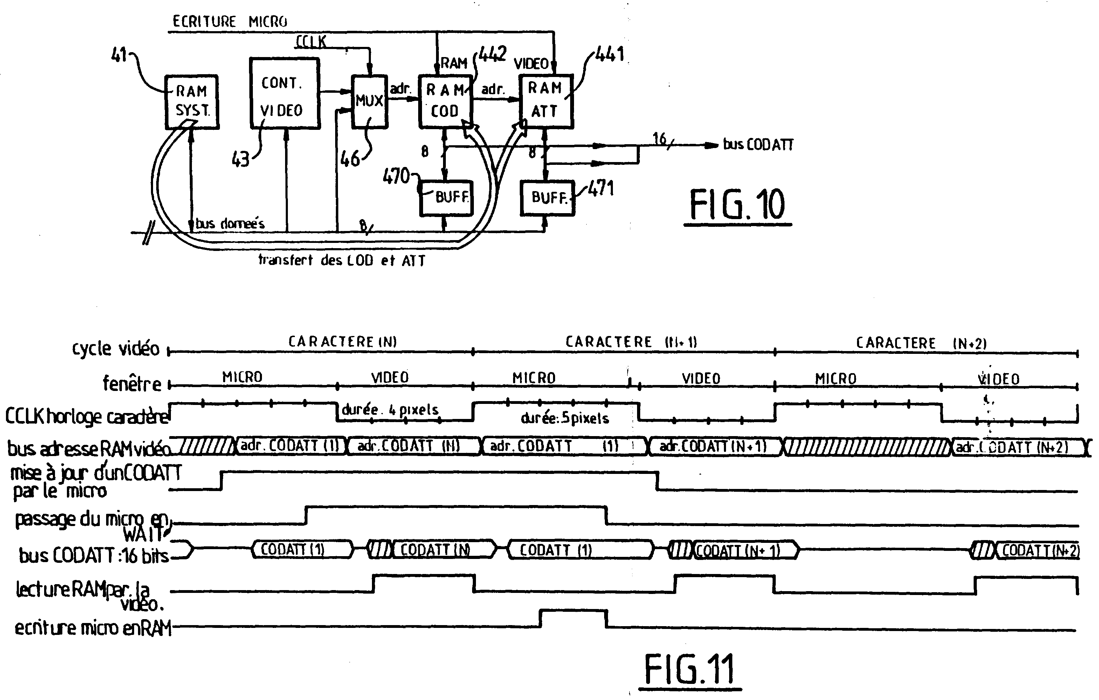

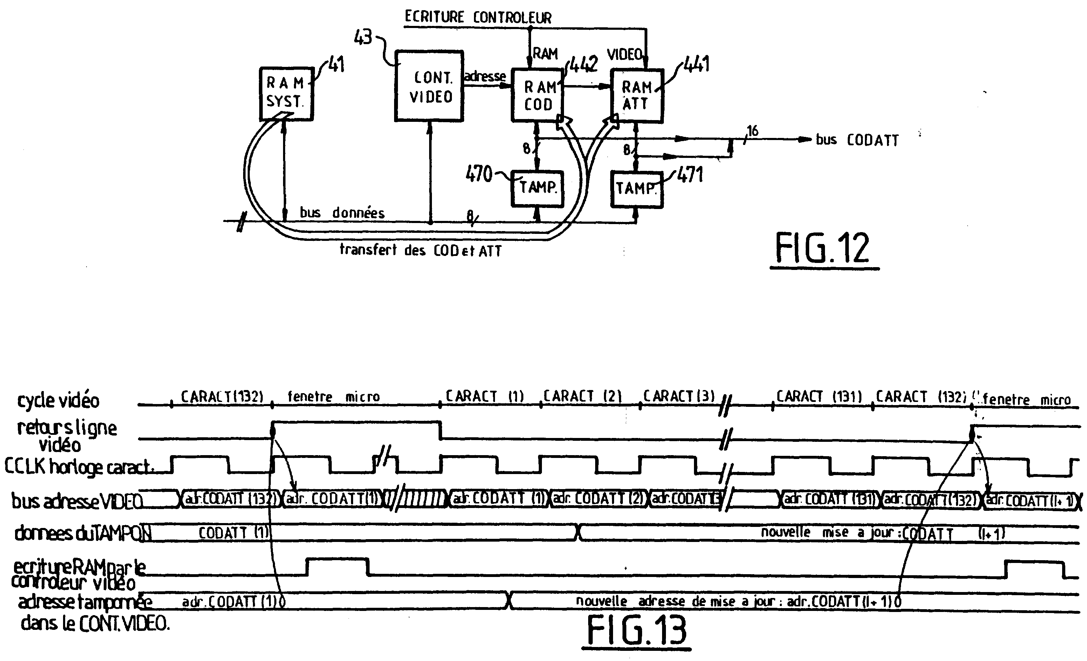

Les différents moyens de transfert de données entre la mémoire système (41) et la mémoire d'écran (44) se font soit par mise à jour par le microprocesseur (81) (figure 9), soit par D.M.A. Accès Direct Mémoire (figure 14). Pour la mise à jour par le micro, on rencontre habituellement 2 techniques suivant que le micro dispose de plus ou moins de bande passante pour effectuer la mise à jour de la mémoire d'écran (44). Cette dernière étant constituée d'une mémoire à double accès, dédiée à l'écran et partagée entre le micro et le contrôleur vidéo. Le fait d'utiliser 2 types de mémoire séparées, mémoire système (41) et mémoire d'écran (442, 441) (figure 10), augmente le coût de la réalisation. Dans un premier cas, le micro peut disposer de la moitié de la bande passante de la vidéo ; c'est ce qu'on obtient quand on partage, comme représenté figure 11 par la ligne fenêtre, l'horloge caractère en 2 intervalles de temps, l'un attribué au micro pour, par exemple, écrire un mot de mise à jour, l'autre au contrôleur vidéo pour la lecture permanente et successive des mots constituant la mémoire d'écran. Dans l'autre solution représentée figures 13 et 14, le micro dispose d'une portion très réduite de bande passante vidéo lui permettant d'écrire le nouveau mot dans un tampon si le tampon est 'vide', la mise à jour effective se faisant par un automate pendant les retours de ligne horizontaux.

La figure 10 représente une réalisation basée sur le principe du partage de bande passante, associée à la figure 14 pour les chronogrammes. Ce type de mise en oeuvre nécessite des RAM statiques de temps d'accès nettement inférieur à la période d'horloge divisée par 2 ; on trouve par exemple pour 132 colonnes avec une horloge caractère de 170ns un temps d'accès de 35ns, et ce pour les 2 mémoires (442, 441) comprenant les 'CODATTs'. Ainsi, quand on désire répondre aux exigences dictées par plusieurs émulations, on est conduit à prendre la taille mémoire couvrant l'émulation la plus gourmande en mémoire, à savoir pour notre application des RAM statiques donnant 8 kmots de 16 bits (pour les 5,7 Kmots nécessaires). Cette solution implique le choix de 2 mémoires statiques rapides de 8 K x 8 à temps d'accès de 35ns, qui constituent une solution chère car en dehors des standards de RAM statiques plutôt centrés autour de 100ns. Le micro prépare la mise à jour en tamponnant les adresses des CODATTs seulement. Ainsi, cette solution laisse au microprocesseur moins de 50 pour cent de bande passante potentielle côté vidéo ; on approche les 14 mises à jour maximum ('CODATTs') par ligne vidéo de fréquence 32 KHz, donnant un débit potentiel maximal de 450000 caractères nouveaux par image, solution amplement suffisante, et ce, malgré le ralentissement accru du micro pour ses accès vidéo. En effet, à chaque accès vidéo, le micro est ralenti par l'asynchronisme entre son cycle et la fenêtre qui lui est attribuée, reportant ainsi le cycle d'écriture à la fenêtre 'micro' suivante, ce qui implique la mise en attente (wait) du micro et la présence de 2 tampons 470, 471 buffers (figures 10 et 11) ; il s'ensuit une certaine perte de bande passante du micro, dépendant également du programme du processus de visualisation.

La figure 12 représente une configuration basée sur le principe de la portion de bande passante réduite correspondant également au brevet numéro EP-A-0 244 280 du 01.04.87. Dans la partie active de la visualisation, comme représenté sur le chronogramme de la figure 13, le contrôleur (43) lit en permanence les différentes positions de la mémoire vidéo (442, 441) afin de recueillir les 'CODATT(i)', pour i de 1 à 132, associés aux 132 caractères de chaque rangée d'écran et ce, au rythme de l'horloge caractère, ce qui conduit à effectuer un cycle de lecture d'un mot de 16 bits en 170ns pour le mode 132 colonnes.

Le micro prépare la mise à jour en tamponnant cette fois les adresses et dans les registres (470, 471) les données du mot 'CODATT' et un automate exécute la commande pendant le prochain retour horizontal du spot ; en effet, pendant ce 'retour ligne', le spot qui excite le phosphore sur le tube cathodique est éteint, et par conséquent le contrôleur vidéo n'a pas besoin de lire la mémoire vidéo. On évite ainsi la gestion de l'entrelacement des accès du micro et du contrôleur vidéo comme précédemment. Ici, on est amené à utiliser de la mémoire statique plus lente : 2 RAM de 8 K x 8 de temps d'accès 100ns suffisent et rendent cette solution moins chère que la précédente. Cependant, le débit de mise à jour reste plus modeste, avoisinant les 30000 nouveaux caractères par seconde, ce qui reste très insuffisant pour obtenir les performances demandées. De plus, on observe un phénomène de performances d'affichage par 'palier' dû à la simultanéité du vidage du buffer ligne et du remplissage du buffer écran, conjugués avec la limitation à une mise à jour par ligne vidéo.

Dans une autre technique de mise à jour par accès direct à la mémoire DMA (figure 14), on dispose de 2 mémoires (420, 421) de type FIFO de profondeur 132 colonnes et de largeur 16 bits permettant le stockage de 2 rangées consécutives de l'écran (figure 14) ; pendant que l'on vide une FIFO (420) représentant les 80 ou 132 mots CODATT de la rangée n (ce qui s'apparente à la lecture permanente de la mémoire d'écran par le contrôleur vidéo dans les 2 exemples précèdents), on remplit l'autre FIFO (421) avec les 80 ou 132 mots CODATT de la rangée n+1, si possible avec la plus grande bande passante. On est donc conduit à l'utilisation d'un contrôleur de DMA très performant qui sache faire une lecture de donnée mémoire système (41) en même temps que son écriture dans la FIFO (421), d'ou la recopie des données CODATT de la rangée n+1 issues de la mémoire système (41) dans cette FIFO (421). La mémoire vidéo dédiée se réduit ici à 2 FIFOs. Cette solution est complexe à réaliser, gourmande en bande passante (de l'ordre de 35 % malgré un DMA performant et ce, pour 12 lignes vidéo par rangée), mais permet des performances d'affichage de 530000 nouveaux caractères par seconde. Néanmoins, elle exige 3 mémoires FIFO dans le cas de défilement lent dans des bandeaux d'écran (SMOOTH SCROLL) ce qui dégrade encore plus la bande passante du micro ; en effet, cette fois, on est obligé d'avoir la possibilité de recharger 2 FIFOs dans le temps de 12 + 1 lignes vidéo ce qui fait passer les 35% à 64%. Dans ce cas, il ne reste plus au micro qu'une bande passante limitée à environ 36%, ce qui peut se révéler insuffisant quand une partie de cette bande est affectée au DMA du réseau local. De plus, cette dernière solution se prête assez mal à l'intégration dans des ASICs de type prédiffusés pour peu qu'on veuille y inclure les FIFOs ; en effet, la puce devient grosse et moins adaptée aux exigences de prix bas envisagé ; des constructeurs de circuits intégrés ont déjà réalisé de telles puces 'custom', sans toutefois y intégrer la partie contrôleur d'attribut (figure 14) ; ce dernier reçoit les CODATT, et les motifs (ou tranches de caractères) issus du générateur de caractères avant de les transformer en signaux Rouge, Vert, Bleu 'intelligibles' pour le moniteur. Un des buts essentiels dans la construction de terminaux bas coût est au plan logique électronique d'intégrer le plus de composants à un prix optimal, ce qui passe par l'intégration du contrôleur d'attribut qui est en général spécifique à chaque constructeur à cause des diverses émulations de terminaux supportées par le passé. Dans les solutions balayées ci-dessus, nous avons toujours soit un surcoût dû à l'ajout d'une mémoire dédiée, soit un problème de performance d'affichage. Il est connu également par la demande de brevet EP 0259827 un terminal utilisant un microprocesseur relié directement à une vidéo RAM par un bus, cette vidéo RAM étant accédée par un séquenceur d'affichage qui à l'aide de la mémoire générateur de caractère va permettre de générer les informations à l'affichage.

L'objet de la présente invention est de proposer une architecture de terminal employant un boîtier de mémoire VIDEO RAM, ou VRAM, pour obtenir de bonnes performances d'affichage en évitant l'utilisation d'une mémoire dédiée

Les données constituant le code de caractère doivent être verrouillées dans un tampon et c'est le microprocesseur qui commande le fonctionnement en fournissant le nombre de lignes affichées au séquenceur, une commande de sélection de la forme de caractère à la mémoire génératrice de caractère et une commande de réécriture d'un code de caractère à la vidéo RAM. La gestion de certaines commandes par le microprocesseur pénalise les performances du terminal et, le nombre de boîtiers nécessaires au fonctionnement du terminal grève également le coût de celui-ci. L'objet de la présente invention est de proposer à un terminal employant un boîtier de mémoire vidéo RAM pour obtenir de bonne performance d'affichage et utilisant un circuit de gestion permettant d'optimiser le coût.

Ce but est atteint par le fait que le terminal comporte un microprocesseur (81), une mémoire vidéo VRAM (83), une mémoire vive (82) générateur de caractère et un circuit de gestion (85), est caractérisé en ce que ledit circuit de gestion (85) gère d'une part l'affichage vidéo et d'autre part les accès de lecture ou d'écriture à la mémoire vidéo VRAM (83) qui constitue d'une part la mémoire système pour mémoriser le code nécessaire au fonctionnement du terminal et d'autre part la mémoire de l'affichage pour mémoriser le code et les attributs des caractères à afficher ; ledit circuit de gestion (85) étant relié d'une part, par un premier bus de donnée (8549) et un premier bus d'adresse (8558) au microprocesseur (81), par un bus parallèle de donnée (8546) et un bus série de donnée (8548) à la mémoire vidéo VRAM (83) et d'autre part, par un second bus d'adresse (8528) et un second bus de donnée (8529) à une mémoire vive (82) générateur de caractère et par cinq lignes de sortie au moniteur vidéo (8530, HRTL, VRT).

Selon une autre particularité le circuit de gestion (85) comporte, outre les circuits de gestion (8556) des accès lecture, écriture de la mémoire vidéo et les circuits de commande (85477) des cycles d'accès et du décalage série de la mémoire vidéo, un circuit (8503 à 8506) permettant de stocker le code et l'attribut d'un caractère courant pour envoyer les attributs sur le circuit contrôleur d'attribut (853), un circuit (8520 à 8523) permettant de stocker les données constituant le motif d'un caractère provenant de la mémoire vive (82) générateur de caractère.

Selon une autre particularité le circuit permettant de stocker le motif courant est un pipeline constitué de 4 registres tampons (8520 à 8523) en série et dont les sorties sont envoyées sur les entrées du circuit contrôleur d'attribut (853) en fonction du signal délivré par un compteur motif (ech-motif) paramétré en fonction du nombre de quartets par motifs, ces motifs comprenant entre 9 et 15 pixels par tranche de caractère.

Selon une autre particularité le circuit comporte un automate (8547, 8557) qui permet de gérer 1 à 132 colonnes et de 1 à 512 lignes par écran.

Selon une autre particularité l'automate (85477) gère les signaux d'interfaçage avec la mémoire vive vidéo VRAM en délivrant les signaux RAS, CAS, DT, OE, nécessaires au fonctionnement de cette mémoire, notamment le rafraîchissement et le "data transfer", ainsi que les signaux de sérialisation de la partie RAM statique.

Selon une autre particularité un compteur (8551) de tranche de caractère paramétrable de 1 à 16 (8508) est utilisé en combinaison avec le code du caractère, et avec un compteur (8552) de quartet paramétrable entre 0 et 3 pour fournir l'adresse du motif dans le générateur de caractère, et en ce qu'un circuit de commande (8553) délivre les signaux CS, WE, OE nécessaires au fonctionnement de la mémoire vive (82) de stockage des caractères.

Selon une autre particularité le circuit de gestion (85) de l'affichage comporte des moyens HOLD, HOLDA de gérer les échanges avec le microprocesseur (81) pendant l'instant critique de chargement du sérialiseur de la VRAM, et ce afin d'empêcher le micro d'accéder à la VRAM ; la contention d'accès à cette VRAM par le micro et la vidéo étant ainsi résolue pendant le transfert d'une rangée dans le sérialiseur.

Selon une autre particularité le circuit permet de stocker le code et l'attribut d'un caractère est un pipeline constitué d'un premier jeu de registres tampons (8500 à 8503) en série et d'un deuxième jeu (8504 et 8506) de registres tampons branchés respectivement chacun en sortie d'un registre du premier jeu et chargés au rythme du signal d'un compteur modulo n, n étant le nombre de registres du premier jeu.

Selon une autre particularité le circuit de gestion comporte un compteur pointeur (85471) dont le déclenchement est effectué de façon anticipée par rapport au chargement de l'adresse de la rangée en cours de traitement.

Selon une autre particularité le circuit de gestion (85) comporte un circuit de gestion de l'adressage (85472) permettant de faire des transferts de donnée de la mémoire vers le circuit de gestion (85), soit par le bus parallèle (8546), soit par le bus série (8548) selon la séquence des signaux envoyés par le circuit de commande (85477) des cycles d'accès et du décalage.

Selon une autre particularité le circuit de gestion de l'adressage (85472) comporte un multiplexeur (854720) à 8 octets d'entrée et une sortie à 9 lignes parmi huit possibilités d'adresse selon les signaux fournis par le circuit (8557) de contrôle et commande du circuit d'adressage en fonction du cycle d'accès choisi.

Selon une autre particularité deux des huit possibilités d'adresse sont fournies par les adresses du bus reliant le circuit de gestion au processeur central (81) sélectionnées par un cycle d'accès processeur central (CPU) à la VRAM (83).

Selon une autre particularité deux autres des huit possibilités sont respectivement d'une part les sorties d'un compteur 8 bits (85475) remis à zéro par le signal (NF) indiquant une nouvelle trame, et incrémenté à chaque nouvelle rangée de caractère affichée, et d'autre part les sorties d'un registre tampon (8549) recevant en entrée 8 bits d'adresse fournis par le processeur central et définissant l'adresse de début de table de pointage (8301) à chaque nouvelle rangée de caractères, et sélectionnée par un cycle d'appel pour charger l'adresse du pointeur de rangée courante.

Selon une autre particularité deux autres des huit possibilités sont les 8 bits d'adresse basse et 8 bits d'adresse haute du pointeur de rangée courante constitués par les sorties d'un pipeline de registre (85473) sélectionnés par un cycle de transfert de données pour charger l'adresse de rangée courante dans la VRAM avant chaque début de nouvelle ligne d'écran, et ce avant de vider le sérialisateur de la VRAM.

Selon une autre particularité deux autres des huit possibilités sont les 8 bits d'adresse basse et 8 bits d'adresse haute d'un compteur pointeur (85470, 85471) chargé avant chaque début de ligne d'écran par l'adresse du pointeur de rangée courante avec une anticipation de comptage d'une unité pour définir l'adresse de la rangée physique suivante de la VRAM lorsque le circuit de comparaison (85476) détecte une fin de rangée physique et déclenche de ce fait un cycle de transfert de données en temps réel.

Selon une autre particularité la mémoire dynamique (830) contient d'une part les vecteurs d'interruptions, les registres de gestion des piles, les buffers de ligne et d'autre part une table de pointage (8301).

Un autre but de l'invention est de proposer un circuit de gestion permettant d'optimiser le coût d'un terminal.

Ce but est atteint par le fait que le circuit de gestion d'une mémoire vidéo, d'une mémoire vive générateur de caractère et de l'affichage d'un terminal est caractérisé en ce qu'il comporte dans un circuit intégré monolithique, des circuits de gestion (8556) des accès lecture, écriture de la mémoire vidéo, un automate de commande (85477) des cycles d'accès, de rafraîchissement, de transfert de donnée et du décalage série de la mémoire vidéo, un circuit de commande (8553) délivrant les signaux CS, WE, OE nécessaires au fonctionnement de la mémoire vive (82) générateur de caractère, un circuit contrôleur d'attribut relié à un premier circuit tampon (8503 à 8506) de stockage du code et de l'attribut d'un caractère courant, provenant de la mémoire vidéo, pour envoyer l'attribut de chaque caractère sur le circuit contrôleur d'attribut (853), un second circuit tampon (8520 à 8523) de stockage des données constituant le motif d'un caractère, provenant de la mémoire vive (82) générateur de caractère, pour envoyer le motif au circuit contrôleur d'attribut (853).

Selon une autre particularité un compteur motif (ech-motif paramétré en fonction du nombre de quartets par motifs, les motifs comprenant entre 9 et 15 pixels par tranche de caractère, un compteur (8551) de tranche de caractère paramétrable de 1 à 16 (8508) dont la sortie est associée avec le code du caractère et avec un compteur (8552) de quartet paramétrable entre 0 et 3 pour fournir l'adresse du motif dans le générateur de caractère.

Selon une autre particularité l'automate (85477, 85557) du circuit de gestion permet de gérer 1 à 132 colonnes et de 1 à 512 lignes par écran.

Selon une autre particularité le circuit de gestion (85) de l'affichage comporte des moyens d'une part de fournir un premier signal HOLD correspondant à une requête de prise de contrôle de bus et d'autre part de recevoir et traiter un second signal HOLDA permettant de gérer les échanges avec le circuit extérieur (81) pendant l'instant critique de chargement du sérialiseur de la VRAM, et ce afin d'empêcher un circuit extérieur d'accéder à la VRAM ; la contention d'accès à cette VRAM étant ainsi résolue pendant le transfert d'une rangée dans le sérialiseur.

Selon une autre particularité le circuit de gestion permet de stocker le code et l'attribut d'un caractère est un pipeline constitué d'un premier jeu de registres tampons (8500 à 8503) en série et d'un deuxième jeu (8504 et 8506) de registres tampons branchés respectivement chacun en sortie d'un registre du premier jeu et chargés au rythme du signal d'un compteur modulo n, n étant le nombre de registres du premier jeu.

Selon une autre particularité le circuit de gestion comporte un compteur pointeur (85471) dont le déclenchement est effectué de façon anticipée par rapport au chargement de l'adresse de la rangée en cours de traitement.

Selon une autre particularité le circuit de gestion (85) comporte un circuit de gestion de l'adressage (85472) permettant de faire des transferts de donnée de la mémoire vers le circuit de gestion (85), soit par le bus parallèle (8546), soit par le bus série (8548) de la mémoire vidéo selon la séquence des signaux envoyés par le circuit de commande (85477) des cycles d'accès et du décalage.

Selon une autre particularité le circuit de gestion de l'adressage (85472) comporte un multiplexeur (854720) à 8 octets d'entrée et une sortie à 9 lignes parmi huit possibilités d'adresse selon les signaux fournis par le circuit (8557) de contrôle et commande du circuit d'adressage en fonction du cycle d'accès choisi.

Selon une autre particularité deux des huit possibilités d'adresse sont fournies par les adresses du bus reliant le circuit de gestion à un processeur central (81) sélectionnées par un cycle d'accès processeur central (CPU) à la VRAM (83).

Selon une autre particularité deux autres des huit possibilités sont respectivement d'une part les sorties d'un compteur 8 bits (85475) remis à zéro par le signal (NF) indiquant une nouvelle trame, et incrémenté à chaque nouvelle rangée de caractère affichée, et d'autre part les sorties d'un registre tampon (8549) recevant en entrée 8 bits d'adresse fournis par le processeur central et définissant l'adresse de début de table de pointage (8301) à chaque nouvelle rangée de caractères, et sélectionnée par un cycle d'appel pour charger l'adresse du pointeur de rangée courante.

Selon une autre particularité deux autres des huit possibilités sont les 8 bits d'adresse basse et 8 bits d'adresse haute du pointeur de rangée courante constitués par les sorties d'un pipeline de registre (85473) sélectionnés par un cycle de transfert de données pour charger l'adresse de rangée courante dans la VRAM avant chaque début de nouvelle ligne d'écran, et ce avant de vider le sérialiseur de la VRAM.

Selon une autre particularité deux autres des huit possibilités sont les 8 bits d'adresse basse et 8 bits d'adresse haute d'un compteur pointeur (85470, 85471) chargé avant chaque début de ligne d'écran par l'adresse du pointeur de rangée courante avec une anticipation de comptage d'une unité pour définir l'adresse de la rangée physique suivante de la VRAM lorsque le circuit de comparaison (85476) détecte une fin de rangée physique et déclenche de ce fait un cycle de transfert de données en temps réel.

D'autres particularités et avantages de la présente invention apparaîtront plus clairement à la lecture de la description ci-après faite en référence aux dessins annexés dans lesquels :
- la figure 1 représente le schéma de principe de l'architecture d'un terminal selon l'invention ;
- la figure 2A représente le schéma de principe du circuit de gestion de mémoire vidéo permettant la mise en oeuvre de l'architecture de l'invention.
- La figure 2B représente le schéma du circuit d'adressage du circuit de gestion de mémoire vidéo de l'invention ;
- La figure 3 représente le schéma de principe de rangement et de transfert des données dans une mémoire vidéo ;
- La figure 4 représente le principe de rangement des données de code et d'attribut ainsi que des autres éléments dans la mémoire vidéo ;
- La figure 5 représente un affichage comportant 25 rangées de 80 ou 132 colonnes de caractères ;
- La figure 6 représente un caractère de 10 points et la correspondance entre les tranches de caractère et les quartets de définition d'une tranche ;
- La figure 7 représente le chronogramme temporel des différents signaux montrant le fonctionnement des échanges entre la mémoire vidéo, la mémoire générateur de caractères et le circuit de gestion de l'affichage.
- La figure 8 le schéma de principe de connexion des terminaux ;
- La figure 9 le schéma de principe d'une architecture de terminal selon l'art antérieur ;
- La figure 10 le schéma de principe d'une autre architecture de terminal selon l'art antérieur ;
- La figure 11 le chronogramme des échanges entre les éléments de l' architecture de la figure 10 ;
- La figure 12 le schéma de principe d'une autre architecture de terminal selon l'art antérieur ;
- La figure 13 le chronogramme des échanges entre les éléments de l'architecture de la figure 12 ;
- La figure 14 le schéma de principe d'une autre architecture de terminal selon l'art antérieur.

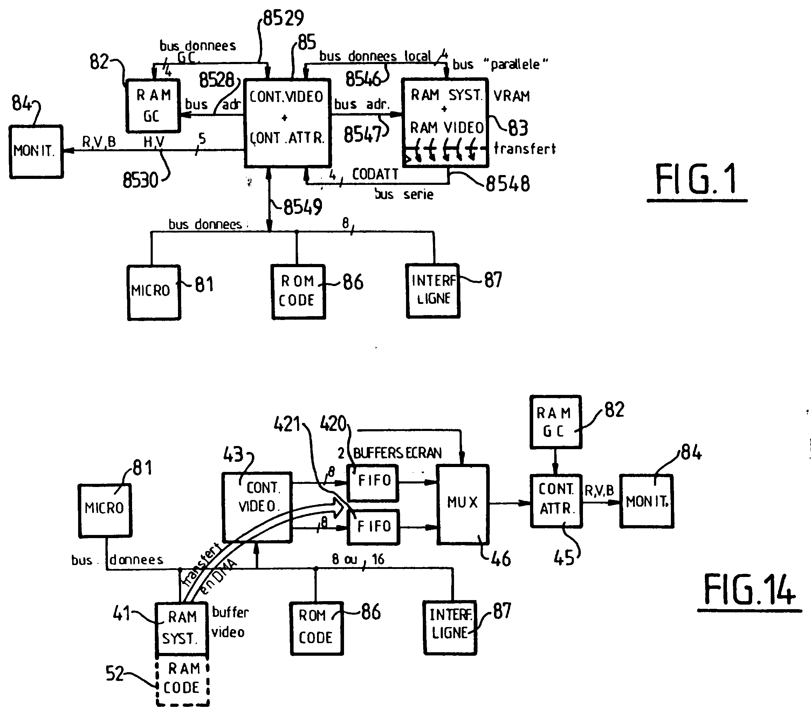

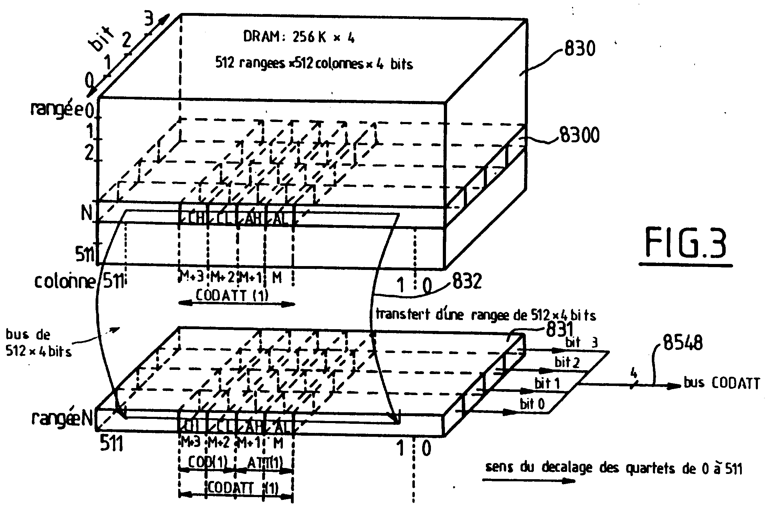

L'architecture de terminal selon l'invention représentée à la figure 1 comprend un microprocesseur (81) relié par un bus de données à 8 bits à un circuit vidéo (85) de gestion de l'affichage sur un moniteur (84) et des échanges avec une mémoire RAM générateur de caractères (82), une mémoire vive du type vidéo RAM (VRAM, 83). La liaison entre le microprocesseur (81) et le circuit de gestion (85) se fait à travers un bus de données (8549) de 8 bits. La liaison entre le circuit de gestion (85) et le moniteur (84) s'effectue par un bus à 5 lignes (8530) délivrant les signaux rouges (R), verts (V), bleus (B), retour horizontal (HRTC), retour vertical (VRT). La liaison entre le circuit de gestion (85) et la mémoire vive statique (SRAM) générateur de caractères (82) est réalisée par un bus d'adresse (8528) à 14 lignes d'adresse et par un bus de données (8529) à 4 lignes de données. La liaison entre le circuit de gestion (85) et la mémoire vidéo VRAM (83) se fait d'une part pour la partie parallèle par un bus d'adresse (8547) à 9 lignes d'adresses et par un bus de données local (8546) à 4 lignes de données et d'autre part pour la partie série par un bus de 4 lignes (8548). Nous rappelerons qu'une VRAM est composée d'une RAM dynamique standard qu'on accède par bus 'parallèle' classique, et d'une RAM statique rapide, appelée sérialiseur, et configurée en registre à décalage qu'on lit par 'bus série', le tout dans un même boîtier (figure 3) ; le couplage entre les 2 mémoires est réalisé en mettant en contact une rangée de mots lus dans la DRAM avec les entrées du registre à décalage, la commande de chargement 'parallèle' du décaleur se faisant à un instant très précis spécifié par la VRAM en synchronisation avec l'horloge de décalage. C'est ce transfert simultané de tous les mots d'une rangée sur un très 'large bus' interne à la VRAM qui lui confère une grande bande passante. La VRAM étant essentiellement une RAM dynamique, le prix du bit est donc minimisé ; certes, sa logique de contrôle est plus complexe car nécessitant un automate de rafraîchissement des cellules et une logique de transfert de la DRAM vers la statique RAM appelée 'décaleur'.

La figure 3 représente l'organisation d'une mémoire vidéo VRAM dans laquelle une partie (830) est constituée par une mémoire vive dynamique de, par exemple, 256 Kmots de 4 bits, ces 256 Kmots étant organisés en 512 rangées de 512 colonnes. Dans une rangée n (8300), 4 mots de 4 bits constituent les 16 bits d'information correspondant aux 8 bits de code et aux 8 bits d'attribut définissant le code et l'attribut (CODATT) du caractère à afficher dans une rangée d'écran. Ces 4 quartets s'appellent respectivement (CH) pour le code haut et (CL) pour le code bas du caractère et (AH) pour l'attribut haut, (AL) pour l'attribut bas. Une tranche matrice mémoire (8300) est transférée par le bus (832) de 512 x 4 bits vers la mémoire vive statique (831) formée de 512 x 4 bits. Cette mémoire est en fait constituée de 4 registres de 512 bits dont les sorties série constituent les 4 lignes du bus série (8548). Une tranche mémoire (8300) permet la mémorisation des 128 informations CODATT correspondant à chaque caractère d'un écran qui pourrait comporter, de cette façon, au maximum, 128 colonnes de caractères.

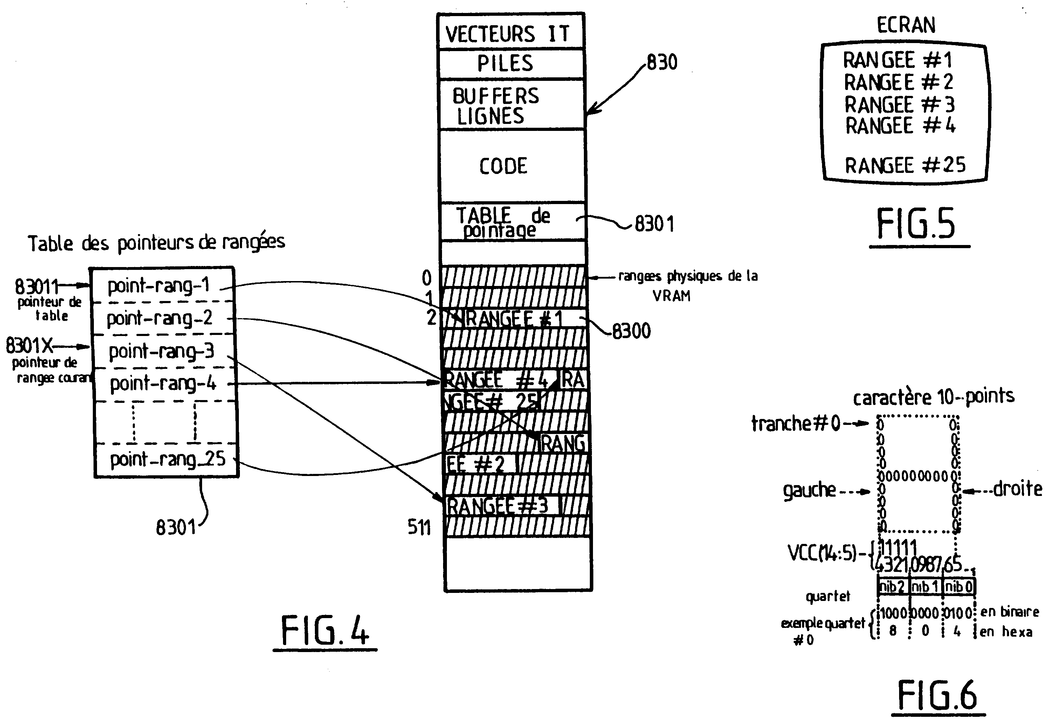

La figure 4 représente l'organisation logique de la mémoire vive dynamique (830), et la figure 5 un écran formé de 25 rangées de (x) colonnes de caractères, le nombre de colonnes pouvant varier entre 80 et 132. Les caractères peuvent avoir une dimension comprise entre 1 et 15 points de représentation par tranche, chaque caractère comprenant de 1 à 16 tranches en motifs. La mémoire dynamique (830) peut être organisée de façon à contenir les vecteurs d'interruption, les registres nécessaires à la gestion de piles, des buffers lignes, le code nécessaire au fonctionnement du terminal et, en particulier, à la gestion de l'affichage et des communications par une interface ligne (87) reliée par le bus (8549) au micro (81) et au circuit de gestion (85) comme représenté à la figure 1. Dans les terminaux connectés en réseau local, un 'boot' situé en ROM permet de télécharger dans le terminal, par l'intermédiaire du réseau local, son programme de présentation venant du concentrateur de données; dans le terminal, ce code à exécuter par le micro est logé dans la partie DRAM de la VRAM avec les buffers d'image, ce qui nécessite une mémoire de plus grande capacité : on utilisera plutôt une VRAM de capacité de 256 K x 4. Pour le type de terminaux consoles, une mémoire VRAM de 64 K x 4 peut suffire étant donné que le micro exécute le code en ROM uniquement.

Cette mémoire (830) contient également une table de pointage (8301) contenant, comme représenté sur la gauche de la figure 4, le pointeur de table (83011) et les différents pointeurs de rangées dont le pointeur de rangées courantes (8301), ces pointeurs définissant les adresses des rangées correspondant aux portions de mémoire telle que (8300) pour la rangée numéro 1 par exemple dans laquelle l'ensemble des informations CODATT correspondant à chacun des caractères constituant une rangée d'affichage à l'écran sont contenues dans la mémoire.

La représentation d'un caractère est réalisée par 16 tranches de 9, 10 ou 15 points selon la taille du caractère et ces représentations sont rangées dans la mémoire statique (82) constituant le générateur de caractères. Ces informations sont mémorisées sous la forme de quartets référencés (nib 0 à nib 3) dont le nombre dépend du nombre de points de chaque caractère. Ces quartets sont rangés à des adresses définies de la mémoire. Ainsi, comme on peut le voir sur la figure 6, le caractère H est représenté par une matrice de 10 points x 9 lignes, le quartet nib 2 de la tranche 0 aura pour valeur en hexadécimal 8, le quartet nib 1 la valeur hexadécimale 0 et le quartet nib 0 la valeur hexadécimale 4. Chacun de ces quartets constitueront les 4 informations envoyées en série sur les 4 lignes du bus (8529), ces informations permettant de reconstituer la tranche 0 de la lettre H pour un caractère à 10 points. De la même façon pour chaque tranche de chaque caractère 2, 3 ou 4 quartets sont mémorisés dans la mémoire 82 selon la taille du caractère de 8, 9, 10 ou 15 points.

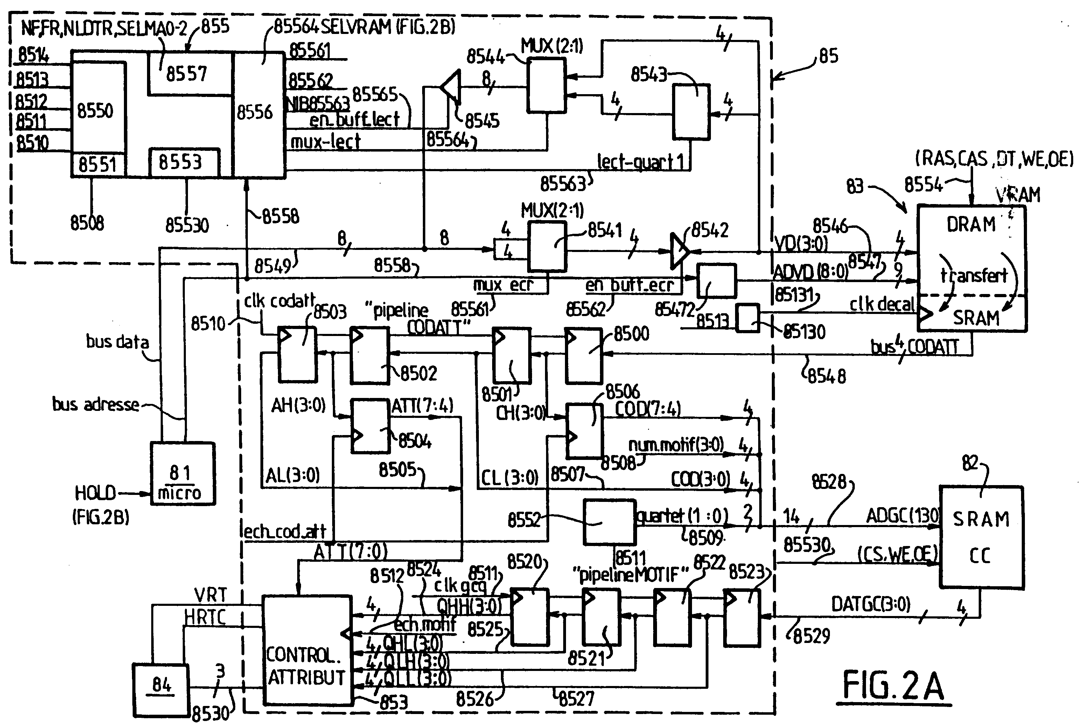

Le circuit (85) permet d'effectuer la gestion des échanges entre les différents éléments constitutifs du terminal. Un premier sous-ensemble constitutif de la gestion des transferts entre le micro (81) et la partie de mémoire dynamique de la mémoire VRAM est formé d'une logique de gestion des transferts d'écriture et de lecture (8556, figure 2A) entre ces éléments et des circuits physiques permettant cette liaison. Cette logique de gestion (8556) génère entre autres le signal SELVRAM (85564) au séquenceur (85477) qui fournit le rythme des signaux de contrôle à la VRAM. Le signal SELVRAM est un simple décodage d'adresse du bus (8558).

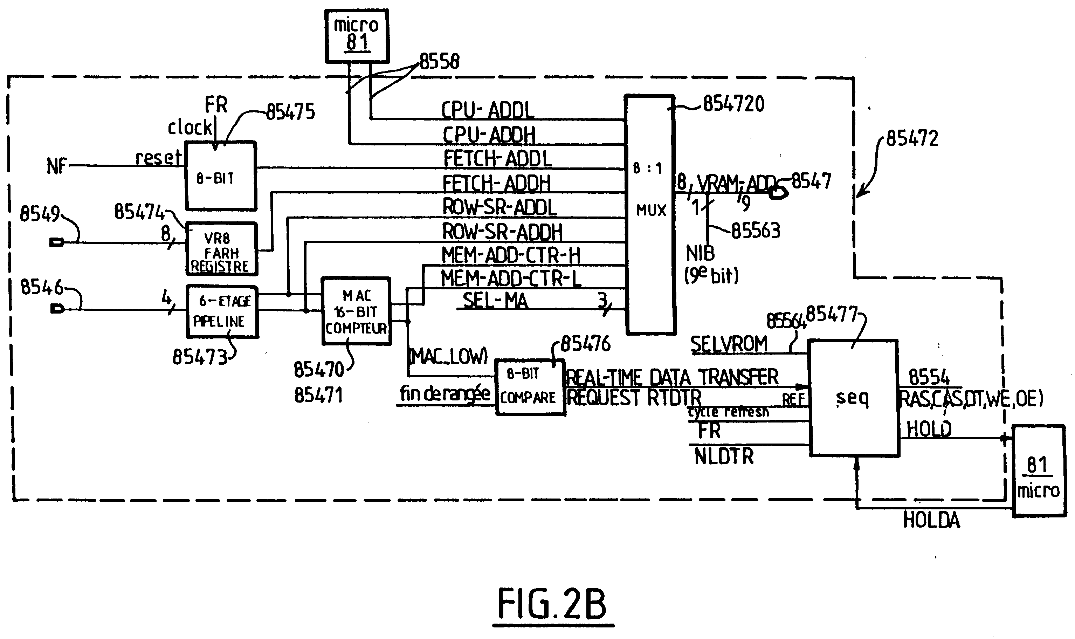

Les circuits physiques sont constitués d'un multiplexeur (8541) branché aux 8 lignes du bus de données (8549) du micro (81) et recevant sur une entrée de commande de multiplexage en écriture le signal (85561) provenant de la logique de gestion (8556). Ce signal de multiplexage en écriture permet de transformer les signaux arrivant sur 8 bits par le bus (8549) en 2 signaux de 4 bits qui sont envoyés du multiplexeur (8541) à un circuit tampon (8542) dont la sortie est connectée par un bus à 4 lignes (8546) aux 4 lignes d'entrée des données dans la mémoire vive dynamique de la VRAM. Le circuit tampon (8542) est commandé par un signal ENBUFECR de validation du tampon en écriture (85562) fourni par une deuxième sortie de la logique de contrôle (8556). La mémoire (figures 2A et 2B) est adressée par un circuit d'adressage (85472) relié en sortie au bus d'adresse de la DRAM (8547) et en entrée au bus d'adresse du micro (8558). Ce circuit d'adressage (85472), représenté à la figure 2B, comporte un registre (85474) relié en entrée au bus de donnée (8549) du microprocesseur (81) et en sortie à un multiplexeur (854720) pour délivrer les 8 bits de la partie haute (FETCH-ADDH) de l'adresse de pointeur de rangée courante (8301X). Ces 8 bits de la partie haute sont en fait l'adresse du début de la table de pointage. La partie basse (FETCH-ADDL) de l'adresse de pointeur de rangée courante est fournie par un compteur 8 bits (85475) remis à zéro par le signal (NF) indiquant une nouvelle trame, et incrémenté à chaque nouvelle rangée de caractères par le signal Fetch-request (FR). Une logique NIB (85563) issue du circuit (8556) permet d'adresser le quartet de la DRAM pour les 8 bus multiplexés.

Un pipeline à 6 étages (85473) reçoit en entrée les 4 lignes du bus de donnée parallèle (8546) de la DRAM. Ce pipeline (85473) permet de stocker les 6 quartets (24 bits) définissant l'adresse de la rangée suivante définie par 16 bits ainsi que son attribut de rangée définissant par 8 bits si la rangée est en double hauteur, double largeur, en début de défilement lent, en fin de défilement lent (smooth scroll) ou normale. Les 16 bits d'adresse de la rangée suivante délivrés en sortie de 4 des tampons du pipeline (85473) définissent en entrée du multiplexeur (854720) les signaux ROW-SR-ADDL adresse basse de registre de rangée et ROW-SR-ADDH adresse haute de registre de rangée.

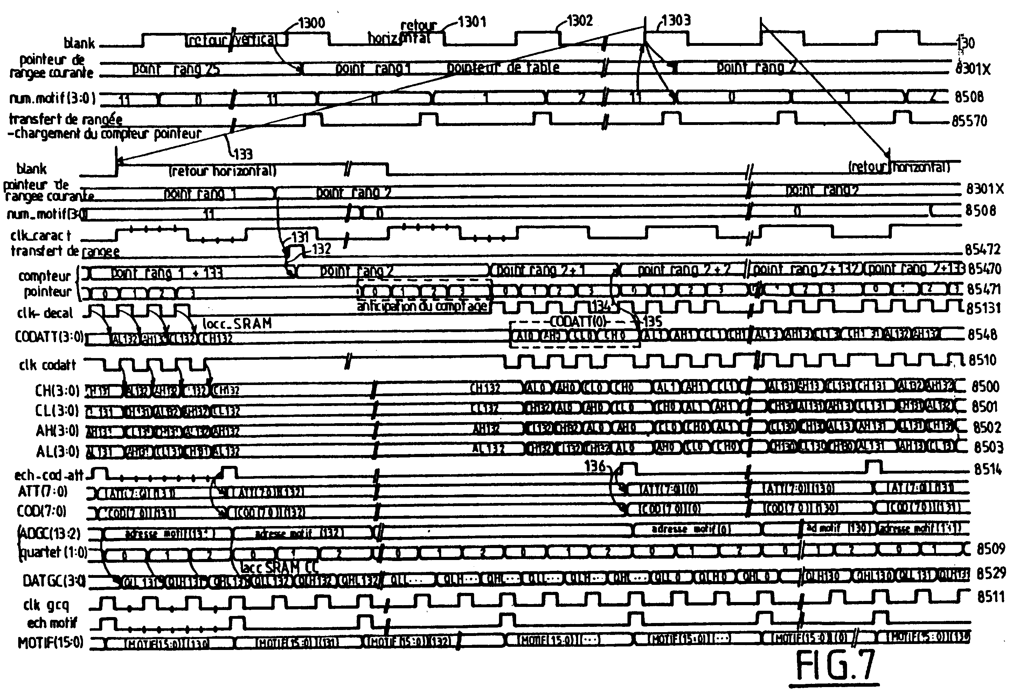

Les sorties du pipeline définissant les 16 bits d'adresse sont également envoyées en entrée d'un compteur pointeur 16 bits (85470, 85471) incrémenté au rythme du décalage d'un CODATT de caractère. Ce compteur pointeur permet d'effectuer une anticipation du comptage d'un caractère, comme représenté à la figure 7, sur la ligne (85471). Cette adresse disponible en sortie du pipeline (85473) est chargée dans le compteur pointeur (85470, 85471) avant chaque début de ligne d'écran par le signal transfert de rangée (85570) (figure 7) et est délivrée par le circuit (8557) qui délivre les signaux de contrôle (8554) et commande du circuit d'adressage (85472).

Un circuit (85476) de détection de fin de rangée physique de la VRAM permet de générer en sortie un signal RTDTR de requête de transfert de donnée en temps réel vers un circuit séquenceur (85477) qui génère les signaux RAS de validation d'adresse de rangée, CAS de validation d'adresse de colonne, DT de transfert de donnée, WE de validation d'écriture, OE d'ouverture du buffer de lecture, sur les entrées (8554) de la mémoire VRAM (83) selon les séquences nécessaires pour permettre le fonctionnement de la mémoire selon un des 4 modes possibles explicités ci-après. Le circuit (8557) délivre également les signaux :
- REF demandant un cycle de rafraîchissement de la VRAM ;
- NF de réinitialisation du compteur (85475) lors du début d'une nouvelle trame ;
- FR de requête d'appel (Fetch-request) pour un nouveau chargement correspondant à une nouvelle rangée de caractères ;
- et NLDTR de requête de transfert de donnée d'une nouvelle ligne.

Le séquenceur (85477) utilise les signaux RTDTR, REF, NLDTR et FR pour générer les séquences des signaux RAS, CAS, DT, WE, OE (8554) nécessaires à un cycle de fonctionnement selon un mode choisi de la mémoire (83). Pour gérer les différents modes d'accès à la mémoire VRAM, ce séquenceur tient également le rôle d'arbitre ; ainsi, il génère entre autres le signal HOLD qui correspond à une requête de prise de contrôle du bus (8549) de la part du circuit vidéo quand l'un des signaux REF, RTDTR, FR ou NLDTR du circuit (85477) est activé. Recevant du micro le signal d'acquittement HOLDA, il prend ainsi le contrôle du bus micro (8549) pour effectuer le cycle demandé. Ces 2 signaux (HOLD, HOLDA) permettent de gérer notamment les échanges avec le micro (81) pendant l'instant critique de chargement du sérialiseur de la VRAM, et ce afin d'empêcher le micro d'accéder à la VRAM. La contention d'accès à cette VRAM par le micro et la vidéo est ainsi résolue pendant le transfert d'une rangée dans le sérialiseur.

Le multiplexeur (854720) comprend en outre les lignes d'entrées CPU-ADDL et CPU-ADDH reliées au bus d'adresse du microprocesseur (81) et 3 entrées de sélection SEL-MAO à SEL-MA2 qui permettent de sélectionner 1 entrée parmi 8 pour la présenter en sortie du multiplexeur (854720) sur le bus (8547).

Ces signaux de sélection SEL-MAO à SEL-MA2 sont également fournis par le circuit (8557).

Le cycle de rafraîchissement VRAM n'emprunte pas le multiplexeur circuit (854720), car on utilise le mode "CAS before RAS" de la VRAM.

Le circuit d'adressage (85472) fonctionne selon 4 types de cycles :
1) un cycle unité centrale (81) CPU où le circuit (854720) multiplexe les adresses basse CPU-ADDL et haute CPU-ADDH ;
2) un cycle appel (FETCH) où le circuit (854720) multiplexe les adresses basse FETCH-ADDL et haute FETCH-ADDH, cette dernière étant fournie par le registre (85474) chargé par l'unité centrale CPU ;
3) un cycle de transfert de donnée ou l'adresse de la rangée courante ROW-SR-ADDL et ROW-SR-ADDH est multiplexée vers la VRAM et chargée dans le compteur pointeur avant chaque début de ligne d'écran par le signal de transfert de rangée (85570) ;
4) un cycle de transfert de donnée en temps réel T-D-T-R où les sorties du compteur pointeur anticipant d'un coup le comptage fournissent les adresses MEM-ADD-CTRH et MEM-ADD-CTRL multiplexées vers la VRAM pour adresser la rangée physique suivante de la VRAM quand on arrive en fin de la rangée physique précédente de la VRAM.

Ainsi, comme représenté à la figure 4, le dernier CODATT de la rangée numéro 2 est le caractère "G" de la syllabe RANG du mot "RANGEE 2" dont la suite est située à l'adresse de rangée physique suivante. On détermine l'adresse de rangée physique suivante par le cycle 4 grâce au compteur pointeur qui fournit l'adresse du CODATT "E". De cette façon, le sérialiseur recevant en continu clk-decal sort en continu les CODATT "G", puis "E", etc.

Un circuit d'horloge (8550) fournit les signaux d'horloge et de séquencement (8510 à 8514) nécessaires au fonctionnement des circuits. En lecture de mémoire, le bus de données (8546) est relié par un registre tampon (8543) à 4 entrées et dont les 4 sorties sont reliées à un circuit multiplexeur à 2 entrées de 4 lignes et 8 sorties parallèles. Les 4 lignes du bus d'adresses (8546) sont également reliées directement à 4 des entrées du circuit de multiplexage. Ainsi, le tampon (8543) permet la mémorisation du 1er quartet de données fourni par le bus de données (8546) et d'attendre la présentation du 2e quartet fourni directement par le bus de données au deuxième quartet d'entrée d'un multiplexeur (8544) pour valider par le signal de lecture quartet (lect-quart 1) la transmission du 1er quartet au multiplexeur (8544) et par le signal de multiplexage lecture (mux-lect) la transmission des 8 bits formés par les deux quartets à la sortie du multiplexeur. Le signal multiplexeur lecture (mux-lect) est fourni par la ligne (85564) provenant du circuit logique (8556). Le signal lecture du 1er quartet est fourni par la ligne (85563) provenant du circuit logique (8556).

Un sous-ensemble (8500 à 8503) du circuit de gestion (85) interface le bus série 4 lignes (8548) avec la mémoire générateur de caractères (82). Ce sous-ensemble est constitué de 4 registres tampons (8500 - 8501 - 8502 - 8503) montés en cascades de manière à former un pipeline. Ces registres tampons sont commandés par un même signal d'horloge CLK-CODATT délivré par la ligne (8510) du circuit (8550) de séquencement. Ainsi, au bout de 4 coups d'horloge CODATT, les sorties des registres contiennent respectivement les attributs bas (AL), les attributs haut (AH), le code bas (CL) et le code haut (CH) d'un caractère de la colonne (x) du rang (y). Les 4 lignes de sortie du premier registre tampon (8500) mémorisant le dernier quartet envoyé par la mémoire, sont envoyées sur un deuxième registre tampon (8506) qui va ainsi mémoriser le quartet haut du code du caractère CH(3:0) en synchronisme avec le signal d'horloge (8510) CLK-CODATT. De même, les sorties du troisième registre tampon (8502) mémorisant le deuxième quartet émis par la mémoire sont envoyées sur un registre tampon supplémentaire (8504) permettant de mémoriser le quartet d'attribut haut AH(3:0) des attributs du caractère. Les quartets bas d'attribut AL(3:0) et de code CL(3:0) de chaque caractère sont fournis directement par les second et troisième registres tampons (8501 - 8503). Les 8 lignes formées des 4 lignes ATT(7:4) fournies par le registre (8504) et les 4 lignes AL(3:0) du registre (8503) constituent les 8 lignes d'attribut envoyées au contrôleur d'attribut (853). Les 4 lignes COD(7:4) de quartet haut du code du caractère délivrées par la sortie du tampon (8506) sont combinées à 4 lignes (8508) fournissant le numéro de motif, à 4 autres lignes (8507) de sortie du deuxième registre tampon (8501) délivrant les quartets bas CL(3:0) du code caractère COD(3:0) et à 2 lignes (8509) fournissant le numéro de quartet de la tranche pour constituer un bus de 14 lignes (8528) commandant les adresses de la mémoire statique vive (82). Le numéro de quartet de la tranche correspond aux éléments dénommés nib. 0 à nib 3 dans la figure 6 et le numéro de motif correspond au numéro de tranche de la figure 6. Ces numéros sont fournis respectivement par les lignes de sortie (8509 - 8508) des circuits de comptage (8552 respectivement 8551). Le premier compteur (8552) est un compteur modulo 4 tandis que le second est un compteur modulo 16 paramétrable en fonction du nombre de tranches ou motifs d'un caractère. La mémoire statique reçoit également par les lignes (85530) les signaux de contrôle fournis par la logique de contrôle (8553) et constitués des signaux CS sélection du circuit, WE écriture lecture, OE validation des sorties. La sortie de la mémoire (82) est interfacée avec le moniteur (84) par un sous-ensemble constitué de 4 registres tampons de 4 bits (8520 à 8523) montés en cascades de façon à constituer un pipeline et commandés en synchronisme par un signal d'horloge clk-gcq fourni par la ligne (8511) de sortie du circuit de séquencement (8550). Les 4 sorties (8527) du premier registre tampon (8523) sont envoyées à 4 entrées du contrôleur d'attributs (853) et constituent le quartet bas/bas (QLL) des 16 bits de chaque tranche de caractère. Les 4 sorties (8526) du deuxième registre tampon (8522) sont envoyées aux 4 lignes suivantes et constituent le quartet bas/haut (QLH) des 16 points constitutifs d'une tranche de caractère. Les sorties (8525) du troisième registre (8521) sont branchées sur 4 autres lignes d'entrée du circuit (853) et constituent les quartets haut/ba (QHL) des 16 points d'une tranche de caractère et enfin les 4 lignes de sortie (8524) du quatrième registre (8520) sont envoyées aux 4 autres lignes d'entrée du contrôleur d'attribut vidéo (853) pour constituer le quartet haut/haut (QHH) des 16 points d'une tranche de caractère. Le circuit du contrôleur d'attribut (853) reçoit également un signal d'horloge ech-motif délivré par la ligne (8512) du circuit de séquencement (8550). Enfin, le contrôleur d'attribut en plus des 3 lignes (8530) délivre une sortie (HRTC) retour horizontal et une sortie (VRT) retour vertical au moniteur (84).

La gestion de l'affichage d'un terminal alphanumérique utilisant une VRAM et le transfert temps réel des rangées de caractères impose de garder une trace de l'adresse courante de la position mémoire SRAM en cours de décalage ; la fonction est réalisée par un compteur 16 bits (compteur 'pointeur' 85470, 8547) dont les sorties coïncident en permanence avec l'adresse de RAM du mot CODATT en cours de décalage (ou sortant de la VRAM à cet instant là par le bus série) ; à cet effet, ce compteur fonctionne à la même fréquence que l'horloge caractère qui rythme les CODATT et comme les données issues de la RAM sont des quartets, on sérialise donc les 4 quartets de chaque CODATT issus de la VRAM avec un train de 4 impulsions dont la fréquence est alors de 4 fois la fréquence des CODATT , soit 4 x 6 = 24 Mhz. Pendant les retours de trame, dans la partie non active de visualisation, un automate charge l'adresse de début de table des adresses de rangées de caractères dans le tampon pointeur de rangée courante (85473) ; ce dernier sera rechargé avant chaque début de nouvelle rangée de caractères avec l'adresse du début de la rangée suivante issue de la table des pointeurs de rangée (figures 4 et 7). Ensuite, pendant les retours horizontaux de chaque ligne vidéo active, une commande de transfert de ce tampon à la fois vers les entrées du compteur 'pointeur' (85470, 85471) et vers le pointeur de la VRAM permet alors de communiquer cette adresse de début de rangée courante au registre à décalage, celui-ci étant prêt à décaler les mots CODATT à partir de l'adresse chargée. Au début de chaque partie active de ligne vidéo, on valide le décaleur qui sort sur le bus série de la VRAM les CODATT(i) pour i variant de 1 à 132 par exemple. Toute rangée donnée N (8300) de la VRAM contient 512 quartets (figure 3), numérotés de 0 à 511, soit 256 octets pouvant accueillir 128 CODATT maximum de 16 bits ; on est conduit dans le cas du mode d'affichage en 132 caractères par ligne, à effectuer des rechargements 'en temps réel' en cours de ligne vidéo afin de compléter les CODATT de la rangée de caractères en cours. Pour ce faire, on fixe un seuil de détection de fin de rangée déterminé par le circuit (85476) ; quand les sorties du compteur 'pointeur' de la rangée N de la VRAM coïncident avec ce seuil, un automate lance une requête de transfert 'temps réel' RTDTR afin de procéder au transfert de la rangée N+1 de la VRAM. Ce transfert qui s'opère à un instant bien précis spécifié par la VRAM doit être synchrone avec la fin de sérialisation de la dernière donnée, à savoir le 511ième quartet de la rangée N de la VRAM ; une fois le chargement exécuté, le décaleur commence alors à sortir les données CODATT suivantes à partir du premier quartet 0 de la rangée N+1 de la VRAM. Ce chargement 'temps réel' ne peut être obtenu que si l'on connaît l'adresse VRAM de la première position mémoire de la nouvelle rangée, à savoir, rangée 'N+1' et colonne 0 ; un moyen simple pour déduire 'N+1' à partir de 'N' sans utiliser d'additionneur est d'anticiper (comme représenté ligne 85471, figure 7) la validation du décalage à chaque début de ligne vidéo d'une durée égale à un caractère et de tamponner les données sérialisées sur 4 bits. Ainsi, pendant le traitement du dernier CODATT(i-1) de la rangée N de VRAM, et grâce à l'anticipation, l'adresse du prochain CODATT(i) est disponible aux sorties du compteur 'pointeur' : rangée 'N+1', colonne 0, il suffit alors de l'utiliser dans le transfert 'temps réel' pour transmettre cette adresse au pointeur de la VRAM (85471, 85470) (figure 2).

Une fois que les données CODATT ont été assemblées derrière le 'pipeline' des CODATTs, on retrouve des mots de 16 bits CODATT(15:0) = [COD(7:0),ATT(7:0)] = [CH,CL,AH,AL] (figure 2). L'attribut ATT est envoyé vers le contrôleur d'attribut (853) et le code COD est associé au numéro de tranche de caractères ou numéro de motif), complémenté par une adresse définissant quartet haut ou bas ; cette adresse GC sur 13 bits permet d'extraire le motif du caractère courant du générateur de caractères à partir d'une mémoire SRAM à bus 4 bits, le tout dans l'unité de temps d'un caractère (figure 7). De cette lecture de la SRAM, on obtient ainsi 16 bits = 4 quartets GCQ3, GCQ2, GCQ1, GCQ0 quand un caractère est représenté sur 16 bits ; dans l'exemple choisi où les caractères sont à base de motifs de 9 pixels dans l'affichage sur 132 colonnes, il faut 3 quartets pour disposer de motifs de 9 pixels. Quand le dernier quartet nécessaire à la définition du motif a été extrait du GC, une commande vers le contrôleur d'attribut l'informe qu'un couple [ATT(7:0)](i) et [MOTIF(15:0)](i) (ou MOTIF(8:0) pour 132 colonnes) associé au caractère i de l'écran est disponible ; le contrôleur d'attribut l'échantillonne alors et le traite ensuite (voir aussi le brevet numéro EP87400711.5 du 01.04.87) en signaux R,V,B intelligibles par le moniteur à tube cathodique. La fréquence d'échantillonnage du contrôleur d'attribut suit évidemment la fréquence de caractère.

Le fonctionnement du circuit va maintenant être détaillé à l'aide de la figure 7 dans laquelle la référence (130) représente les signaux de commandes de balayage avec la référence (1300) représentant le signal de retour vertical délivré par la sortie VRT et les références (1301) représentant les signaux de retour horizontaux délivrés par la sortie HRTC. La référence (8301x) représente le pointeur de rangée courante et son évolution dans le temps. La référence (8508) représente la valeur du numéro de tranche ou de motif évoluant entre 0 et 11 dans le cas d'un caractère comprenant 12 tranches. La référence (85470) représente le chargement du compteur pointeur avec la valeur du pointeur de rangée courante, ceci avant d'effectuer un transfert de rangées, et de sérialiser cette rangée ensuite. Lorsque l'on considère le retour horizontal (1303), le pointeur de rangée courante passant de la valeur pointeur de la rangée 1 à la valeur correspondant au pointage de la rangée 2 et le numéro de motif passant de 11 à 0, l'affichage de la rangée 1 vient de se terminer pour passer à l'affichage de la rangée 2. Chaque rangée comporte 132 caractères et l'adresse du caractère à afficher est déterminée en ajoutant à la valeur du pointeur de rangée (85470) la valeur d'un compteur modulo 4 qui donne les adresses de poids faible du caractère. A cette partie de poids faible définissant le numéro du caractère dans la colonne, s'ajoute une deuxième partie de poids faible constituée par la sortie du compteur (85471) qui définit l'adresse du quartet du mot CODATT adressé dans la mémoire, ce mot CODATT étant constitué de 4 quartets. L'ensemble compteur pointeur est constitué par les compteurs (85470 -85471) et fonctionne à la même fréquence que l'horloge caractère CLK-CODATT. Le compteur (85471) réalise une anticipation de comptage qui permet de connaître l'adresse du premier quartet de CODATT dès que le pointeur de caractère de la colonne suivante dans la même rangée est chargé. Les quartets de caractère sont transférés de la VRAM vers la SRAM par les commandes du circuit de commande de cycles (8557) et sont décalés en série au rythme de la clock clk-decal représentée par la ligne (85131) constitué de la sortie d'un compteur 85230 modulo n qui peut être paramétré entre 0 et 132 et dont l'entrée d'horloge reçoit un signal d'horloge de fréquence (8513) correspondant à celle du signal clk-decal. Les 4 quartets sortie en série sont stockés temporairement dans les registres tampons (8500 à 8503) au rythme de l'horloge clk- codatt représentée par la ligne (8510). Cette horloge correspond à un signal de même fréquence que l'horloge clk-decal mais décalé d'une période. Les lignes (8500 à 8503) représentent les contenus des tampons correspondants de la figure 2 au moment du traitement des caractères. Ces lignes représentent également le décalage des caractères dans le temps en fonction du signal d'horloge clk-codatt de façon qu'au moment de l'apparition des impulsions ech-cod-att correspondant au caractère 0 représenté par les flêches 134, 135, 136 les quartets de ce caractère CH-O, CL-O, AH-O, AL-O se trouvent respectivement dans les registres (8500 - 8501 - 8502 - 8503). A l'impulsion 136 d'horloge ech-cod-att, le transfert des caractères CH-O et AH-O se fait dans les registres tampons (8504 - 8506) et les attributs du caractère O apparaissent en entrée du circuit (853) tandis que le code du caractère O est combiné au numéro de motif et au numéro de quartet de caractère digitalisé pour servir d'adresse en vue d'adresser la mémoire RAM (82). Le numéro de quartet est fourni par un compteur (8552) recevant un signal d'horloge (8511) de même fréquence que le signal d'horloge clk-gcq mais décalé en avant d'une demi-periode. Ce compteur (8552) peut être paramétré entre 0 et 4 pour compter un nombre de quartets dépendant du nombre de points représentés dans une tranche de caractère. Le numéro du motif est fourni par la sortie (8508) du circuit (8551) qui est en fait un compteur de tranche de caractère qui peut être paramétré entre 0 et 16, ce compteur de numéro de motif étant incrémenté de 1 à chaque fois que le compteur de quartet aura atteint la valeur maximum pour laquelle il a été paramétré. L'adresse ainsi constituée, le circuit de commande (855) fournit par l'intermédiaire de la partie de contrôle (8553) les signaux CS;WE et OE nécessaires au fonctionnement de la RAM (82) en lecture et celle-ci délivre sur le bus (8529) les données constituant les points d'une tranche d'un caractère. Ces données sont fournies sous forme de quartets appelés QLL QLH QHL QHH qui sont chargés progressivement dans les registres tampons (8520 à 8523) au rythme de l'horloge clk-gcq fournie par la ligne (8511). Un signal de synchronisation (8512) fournissant le signal ech-motif et constitué par la sortie d'un compteur programmable en fonction du nombre de points d'affichage d'un caractère, en l'occurence ici 9. Ce signal permet d'effectuer le transfert des quartets des registres tampons vers le contrôleur d'attribut lorsque les points de caractère nécessaires à l'affichage ont été stockés. Dans le cas de 9 pixels, le quartet QHH n'est pas utilisé et pour cette raison, il n'a pas été représenté sur la ligne (8529) du diagramme de la figure 13.

## Revendications

1. Terminal comportant un microprocesseur (81),une mémoire vidéo VRAM (83),une mémore vive (82) générateur de caractère et un circuit de gestion (85), caractérisé en ce que ledit circuit de gestion (85) gère d'une part l'affichage vidéo et d'autre part les accès de lecture ou d'écriture à la mémoire vidéo VRAM (83) qui constitue d'une part la mémoire système pour mémoriser le code nécessaire au fonctionnement du terminal et d'autre part la mémoire de l'affichage pour mémoriser le code et les attributs des caractères à afficher; ledit circuit de gestion (85) étant relié d'une part, par un premier bus de donnée (8549) et un premier bus d'adresse (8558) au microprocesseur (81), par un bus parallèle de donnée (8546) et un bus série de donnée (8548) à la mémoire vidéo VRAM (83) et d'autre part, par un second bus d'adresse (8528) et un second bus de donnée (8529) à une mémoire vive (82) générateur de caractère et par cinq lignes de sortie au moniteur vidéo (8530, HRTL, VRT).

2. Terminal selon la revendication 1 dans lequel le circuit de gestion (85) comporte, outre les circuits de gestion (8556) des accès lecture, écriture de la mémoire vidéo et les circuits de commande (85477) des cycles d'accès et du décalage série de la mémoire vidéo, un circuit (8503 à 8506) permettant de stocker le code et l'attribut d'un caractère courant pour envoyer les attributs sur le circuit contrôleur d'attribut (853), un circuit (8520 à 8523) permettant de stocker les données constituant le motif d'un caractère provenant de la mémoire vive (82) générateur de caractère.

3. Terminal selon la revendication 2 caractérisée en ce que le circuit permettant de stocker le motif courant est un pipeline constitué de 4 registres tampons (8520 à 8523) en série et dont les sorties sont envoyées sur les entrées du circuit contrôleur d'attribut (853) en fonction du signal délivré par un compteur motif (ech-motif) paramétré en fonction du nombre de quartets par motifs, ces motifs comprenant entre 9 et 15 pixels par tranche de caractère.

4. Terminal selon la revendication 2 ou 3, caractérisée en ce que le circuit comporte un automate (85477, 8557) qui permet de gérer 1 à 132 colonnes et de 1 à 512 lignes par écran.

5. Terminal selon la revendication 4, caractérisée en ce que l'automate (85477) gère les signaux d'interfaçage avec la mémoire vive vidéo VRAM en délivrant les signaux RAS, CAS, DT, OE, nécessaires au fonctionnement de cette mémoire, notamment le rafraîchissement et le "data transfer", ainsi que les signaux de sérialisation de la partie RAM statique.

6. Terminal selon la revendication 2 ou 5, caractérisée en ce que un compteur (8551) de tranche de caractère paramétrable de 1 à 16 (8508) est utilisé en combinaison avec le code du caractère, et avec un compteur (8552) de quartet paramétrable entre 0 et 3 pour fournir l'adresse du motif dans le générateur de caractère, et en ce qu'un circuit de commande (8553) délivre les signaux CS, WE, OE nécessaires au fonctionnement de la mémoire vive (82) de stockage des caractères.

7. Terminal selon une des revendications précédentes, caractérisée en ce que le circuit de gestion (85) de l'affichage comporte des moyens HOLD, HOLDA de gérer les échanges avec le microprocesseur (81) pendant l'instant critique de chargement du sérialiseur de la VRAM, et ce afin d'empêcher le micro d'accéder à la VRAM ; la contention d'accès à cette VRAM par le micro et la vidéo étant ainsi résolue pendant le transfert d'une rangée dans le sérialiseur.

8. Terminal selon la revendication 2, caractérisée en ce que le circuit permettant de stocker le code et l'attribut d'un caractère est un pipeline constitué d'un premier jeu de registres tampons (8500 à 8503)en série et d'un deuxième jeu (8504 et 8506) de registres tampons branchés respectivement chacun en sortie d'un registre du premier jeu et chargés au rythme du signal d'un compteur modulo n, n étant le nombre de registres du premier jeu.

9. Terminal selon une des revendications précédentes, caractérisée en ce que le circuit de gestion comporte un compteur pointeur (85471) dont le déclenchement est effectué de façon anticipée par rapport au chargement de l'adresse de la rangée en cours de traitement.

10. Terminal selon une des revendications précédentes, caractérisée en ce que le circuit de gestion (85) comporte un circuit de gestion de l'adressage (85472) permettant de faire des transferts de donnée de la mémoire vers le circuit de gestion (85), soit par le bus parallèle (8546), soit par le bus série (8548) selon la séquence des signaux envoyés par le circuit de commande (85477) des cycles d'accès et du décalage.

11. Terminal selon la revendication 10, caractérisée en ce que le circuit de gestion de l'adressage (85472) comporte un multiplexeur (854720) à 8 octets d'entrée et une sortie à 9 lignes parmi huit possibilités d'adresse selon les signaux fournis par le circuit (8557) de contrôle et commande du circuit d'adressage en fonction du cycle d'accès choisi.

12. Terminal selon la revendication 11, caractérisé en ce que deux des huit possibilités d'adresse sont fournies par les adresses du bus reliant le circuit de gestion au processeur central (81) sélectionnées par un cycle d'accès processeur central (CPU) à la VRAM (83).

13. Terminal selon la revendication 12, caractérisée en ce que deux autres des huit possibilités sont respectivement d'une part les sorties d'un compteur 8 bits (85475) remis à zéro par le signal (NF) indiquant une nouvelle trame, et incrémenté à chaque nouvelle rangée de caractère affichée, et d'autre part les sorties d'un registre tampon (8549) recevant en entrée 8 bits d'adresse fournis par le processeur central et définissant l'adresse de début de table de pointage (8301) à chaque nouvelle rangée de caractères, et sélectionnée par un cycle d'appel pour charger l'adresse du pointeur de rangée courante.

14. Terminal selon la revendication 13, caractérisé en ce que deux autres des huit possibilités sont les 8 bits d'adresse basse et 8 bits d'adresse haute du pointeur de rangée courante constitués par les sorties d'un pipeline de registre (85473) sélectionnés par un cycle de transfert de données pour charger l'adresse de rangée courante dans la VRAM avant chaque début de nouvelle ligne d'écran, et ce avant de vider le sérialiseur de la VRAM.

15. Terminal selon la revendication 14, caractérisée en ce que deux autres des huit possibilités sont les 8 bits d'adresse basse et 8 bits d'adresse haute d'un compteur pointeur (85470, 85471) chargé avant chaque début de ligne d'écran par l'adresse du pointeur de rangée courante avec une anticipation de comptage d'une unité pour définir l'adresse de la rangée physique suivante de la VRAM lorsque le circuit de comparaison (85476) détecte une fin de rangée physique et déclenche de ce fait un cycle de transfert de données en temps réel.

16. Terminal selon une des revendications précédentes caractérisé en ce que la mémoire dynamique (830) contient d'une part les vecteurs d'interruptions, les registres de gestion des piles, les buffers de ligne et d'autre part une table de pointage (8301).

17. Circuit de gestion d'une mémoire vidéo, d'une mémoire vive générateur de caractère et de l'affichage d'un terminal caractérisé en ce qu'il comporte dans un circuit intégré monolithique, des circuits de gestion (8556) des accès lecture, écriture de la mémoire vidéo,un automate de commande (85477) des cycles d'accès, de rafraîchissement, de transfert de donnée et du décalage série de la mémoire vidéo, un circuit de commande (8553) délivrant les signaux CS, WE, OE nécessaires au fonctionnement de la mémoire vive (82) générateur de caractère, un circuit contrôleur d'attribut relié à un premier circuit tampon (8503 à 8506) de stockage du code et de l'attribut d'un caractère courant, provenant de la mémoire vidéo, pour envoyer l' attribut de chaque caractère sur le circuit contrôleur d'attribut (853), un second circuit tampon (8520 à 8523) de stockage des données constituant le motif d'un caractère, provenant de la mémoire vive (82) générateur de caractère, pour envoyer le motif au circuit contrôleur d'attribut (853).

18. Circuit de gestion d'une mémoire vidéo, d'une mémoire vive générateur de caractère et de l'affichage d'un terminal selon la revendication 17 caractérisé en ce qu'il comporte un compteur motif (ech-motif) paramétré en fonction du nombre de quartets par motifs, les motifs comprenant entre 9 et 15 pixels par tranche de caractère, un compteur (8551) de tranche de caractère paramétrable de 1 à 16 (8508) dont la sortie est associée avec le code du caractère et avec un compteur (8552) de quartet paramétrable entre 0 et 3 pour fournir l'adresse du motif dans le générateur de caractère.

19. Circuit de gestion d'une mémoire vidéo, d'une mémoire vive générateur de caractère et de l'affichage d'un terminal selon la revendication 2 ou 3, caractérisée en ce que l'automate (85477, 8557) permet de gérer 1 à 132 colonnes et de 1 à 512 lignes par écran.

20. Circuit de gestion d'une mémoire vidéo, d'une mémoire vive générateur de caractère et de l'affichage d'un terminal selon une des revendications 17 à 20, caractérisée en ce que le circuit de gestion (85) de l'affichage comporte des moyens d'une part de fournir un premier signal HOLD correspondant à une requête de prise de contrôle de bus et d'autre part de recevoir et traiter un second signal HOLDA permettant de gérer les échanges avec le circuit extérieur (81) pendant l'instant critique de chargement du sérialiseur de la VRAM, et ce afin d'empêcher un circuit extérieur d'accéder à la VRAM ; la contention d'accès à cette VRAM étant ainsi résolue pendant le transfert d'une rangée dans le sérialiseur.

21. Circuit de gestion d'une mémoire vidéo, d'une mémoire vive générateur de caractère et de l'affichage d'un terminal selon une des revendications 17 à 20, caractérisé en ce que le circuit permettant de stocker le code et l'attribut d'un caractère est un pipeline constitué d'un premier jeu de registres tampons (8500 à 8503)en série et d'un deuxième jeu (8504 et 8506) de registres tampons branchés respectivement chacun en sortie d'un registre du premier jeu et chargés au rythme du signal d'un compteur modulo n, n étant le nombre de registres du premier jeu.

22. Circuit de gestion d'une mémoire vidéo, d'une mémoire vive générateur de caractère et de l'affichage d'un terminal selon une des revendications 17 à 21, caractérisé en ce que le circuit de gestion comporte un compteur pointeur (85471) dont le déclenchement est effectué de façon anticipée par rapport au chargement de l'adresse de la rangée en cours de traitement.

23. Circuit de gestion d'une mémoire vidéo, d'une mémoire vive générateur de caractère et de l'affichage d'un terminal selon une des revendications 17 à 22, caractérisé en ce que le circuit de gestion (85) comporte un circuit de gestion de l'adressage (85472) permettant de faire des transferts de donnée de la mémoire vers le circuit de gestion (85), soit par le bus parallèle (8546), soit par le bus série (8548) de la mémoire vidéo selon la séquence des signaux envoyés par le circuit de commande (85477) des cycles d'accès et du décalage.

24. Circuit de gestion d'une mémoire vidéo, d'une mémoire vive générateur de caractère et de l'affichage d'un terminal selon la revendication 23, caractérisé en ce que le circuit de gestion de l'adressage (85472) comporte un multiplexeur (854720) à 8 octets d'entrée et une sortie à 9 lignes parmi huit possibilités d'adresse selon les signaux fournis par le circuit (8557) de contrôle et commande du circuit d'adressage en fonction du cycle d'accès choisi.

25. Circuit de gestion d'une mémoire vidéo, d'une mémoire vive générateur de caractère et de l'affichage d'un terminal selon la revendication 24, caractérisé en ce que deux des huit possibilités d'adresse sont fournies par les adresses du bus reliant le circuit de gestion à un processeur central (81) sélectionnées par un cycle d'accès processeur central (CPU) à la VRAM (83).

26. Circuit de gestion d'une mémoire vidéo, d'une mémoire vive générateur de caractère et de l'affichage d'un terminal selon la revendication 25, caractérisée en ce que deux autres des huit possibilités sont respectivement d'une part les sorties d'un compteur 8 bits (85475) remis à zéro par le signal (NF) indiquant une nouvelle trame, et incrémenté à chaque nouvelle rangée de caractère affichée, et d'autre part les sorties d'un registre tampon (8549) recevant en entrée 8 bits d'adresse fournis par le processeur central et définissant l'adresse de début de table de pointage (8301) à chaque nouvelle rangée de caractères, et sélectionnée par un cycle d'appel pour charger l'adresse du pointeur de rangée courante.

27. Circuit de gestion d'une mémoire vidéo, d'une mémoire vive générateur de caractère et de l'affichage d'un terminal selon la revendication 26, caractérisé en ce que deux autres des huit possibilités sont les 8 bits d'adresse basse et 8 bits d'adresse haute du pointeur de rangée courante constitués par les sorties d'un pipeline de registre (85473) sélectionnés par un cycle de transfert de données pour charger l'adresse de rangée courante dans la VRAM avant chaque début de nouvelle ligne d'écran, et ce avant de vider le sérialiseur de la VRAM.

28. Circuit de gestion d'une mémoire vidéo, d'une mémoire vive générateur de caractère et de l'affichage d'un terminal selon la revendication 27, caractérisée en ce que deux autres des huit possibilités sont les 8 bits d'adresse basse et 8 bits d'adresse haute d'un compteur pointeur (85470, 85471) chargé avant chaque début de ligne d'écran par l'adresse du pointeur de rangée courante avec une anticipation de comptage d'une unité pour définir l'adresse de la rangée physique suivante de la VRAM lorsque le circuit de comparaison (85476) détecte une fin de rangée physique et déclenche de ce fait un cycle de transfert de données en temps réel.

## Patentansprüche

1. Datenendgerät, das einen Mikroprozessor (81), einen VRAM-Videospeicher (83), einen Schreib-Lese-Speicher (82) zur Zeichenerzeugung sowie eine Verwaltungsschaltung (85) enthält, dadurch gekennzeichnet, daß die Verwaltungsschaltung (85) einerseits die Videoanzeige und andererseits den Lese- oder Schreibzugriff auf den VRAM-Videospeicher (83) verwaltet, der einerseits den Systemspeicher zum Speichern des für den Betrieb des Datenendgeräts notwendigen Codes und andererseits den Anzeigespeicher zum Speichern des Codes und der Attribute der anzuzeigenden Zeichen bildet; wobei die Verwaltungsschaltung (85) einerseits über einen ersten Datenbus (8549) und einen ersten Adressenbus (8558) mit dem Mikroprozessor (81), über einen parallelen Datenbus (8546) und einen seriellen Datenbus (8548) mit dem VRAM-Videospeicher (83) und andererseits über einen zweiten Adressenbus (8528) und einen zweiten Datenbus (8529) mit einem Schreib-Lese-Speicher (82) zur Zeichenerzeugung sowie über fünf Ausgangsleitungen mit einem Video-Monitor (8530, HRTL, VRT) verbunden ist.

2. Datenendgerät nach Anspruch 1, in dem die Verwaltungsschaltung (85) außer den Verwaltungsschaltungen (8556) für die Lese- und Schreibzugriffe auf den Videospeicher und den Steuerschaltungen (85477) für die Zugriffszyklen und die serielle Verschiebung des Videospeichers eine Schaltung (8503 bis 8506), die die Speicherung des Codes und des Attributs eines momentanen Zeichens ermöglicht, um die Attribute zur Attributsteuerschaltung (853) zu schicken, sowie eine Schaltung (8520 bis 8523) enthält, die die Speicherung der Daten ermöglicht, die das Muster eines Zeichens bilden, das vom Schreib-Lese-Speicher (82) zur Zeichenerzeugung stammt.

3. Datenendgerät nach Anspruch 2, dadurch gekennzeichnet, daß die Schaltung, die die Speicherung des momentanen Musters ermöglicht, eine Pipeline ist, die aus vier seriellen Pufferregistern (8520 bis 8523) gebildet ist, deren Ausgangssignale in Abhängigkeit von dem von einem Musterzähler (ech-motif) gelieferten Signal an die Eingänge der Attributsteuerschaltung (853) geschickt werden, wobei der Musterzähler in Abhängigkeit von der Anzahl der Halbbytes pro Muster parametrisiert ist, wobei diese Muster zwischen 9 und 15 Pixel pro Zeichenscheibe enthalten.

4. Datenendgerät nach Anspruch 2 oder 3, dadurch gekennzeichnet, daß die Schaltung einen Automaten (85477, 8557) enthält, der die Verwaltung von 1 bis 132 Spalten und von 1 bis 512 Zeilen pro Bildschirm ermöglicht.

5. Datenendgerät nach Anspruch 4, dadurch gekennzeichnet, daß der Automat (85477) die Schnittstellensignale für den flüchtigen VRAM-Videospeicher verwaltet, indem er die für den Betrieb dieses Speichers, insbesondere für die Auffrischung und die "Datenübertragung" notwendigen Signale RAS, CAS, DT, OE sowie die Serialisierungssignale des statischen RAM-Teils liefert.

6. Datenendgerät nach Anspruch 2 oder 5, dadurch gekennzeichnet, daß ein von 1 bis 16 (8508) parametrisierbarer Zeichenscheiben-Zähler (8551) in Kombination mit dem Zeichencode und mit einem zwischen 0 und 3 parametrisierbaren Halbbyte-Zähler (8552) für die Lieferung der Adresse des Musters im Zeichengenerator verwendet wird und daß eine Steuerschaltung (8553) die Signale CS, WE, OE liefert, die für den Betrieb des flüchtigen Speichers (82) für die Zeichenspeicherung notwendig sind.

7. Datenendgerät nach einem der vorangehenden Ansprüche, dadurch gekennzeichnet, daß die Anzeige-Verwaltungsschaltung (85) Mittel HOLD, HOLDA zur Verwaltung der Austauschvorgänge mit dem Mikroprozessor (81) während des kritischen Zeitpunkts des Ladens des Serialisieres des VRAM enthält, um dadurch zu verhindern, daß der Mikroprozessor auf den VRAM zugreift; wodurch die Sperre des Zugriffs auf diesen VRAM durch den Mikroprozessor und den Video-Monitor während der Übertragung einer Reihe im Serialisierer aufgehoben ist.

8. Datenendgerät nach Anspruch 2, dadurch gekennzeichnet, daß die die Speicherung des Codes und des Attributs eines Zeichens ermöglichende Schaltung eine Pipeline ist, die aus einem ersten Satz von seriellen Pufferregistern (8500 bis 8503) sowie aus einem zweiten Satz (8504 und 8506) von Pufferregistern gebildet ist, welche jeweils am Ausgang eines Registers des ersten Satzes angeschlossen sind und im Takt des Signals eines Modulo-n-Zählers geladen werden, wobei n die Anzahl der Register des ersten Satzes ist.

9. Datenendgerät nach einem der vorangehenden Ansprüche, dadurch gekennzeichnet, daß die Verwaltungsschaltung einen Zeiger-Zähler (85471) enthält, dessen Auslösung in bezug auf das Laden der Adresse der Reihe während der Verarbeitung im voraus erfolgt.

10. Datenendgerät nach einem der vorangehenden Ansprüche, dadurch gekennzeichnet, daß die Verwaltungsschaltung (85) eine Adressierungs-Verwaltungsschaltung (85472) enthält, die die Ausführung von Datenübertragungen vom Speicher zur Verwaltungsschaltung (85) entsprechend der Folge der von der Steuerschaltung (85477) für die Zugriffszyklen und für die Verschiebung geschickten Signale entweder über den parallelen Bus (8546) oder über den seriellen Bus (8548) ermöglicht.

11. Datenendgerät nach Anspruch 10, dadurch gekennzeichnet, daß die Adressierungs-Verwaltungsschaltung (85472) einen Multiplexierer (854720) enthält mit einem 8-Byte-Eingang und einem Ausgang mit 9 Leitungen für acht Adressenmöglichkeiten je nach den Signalen, die von der Schaltung (8557) für die Kontrolle und die Steuerung der Adressierungsschaltung in Abhängigkeit vom gewählten Zugriffszyklus geliefert werden.

12. Datenendgerät nach Anspruch 11, dadurch gekennzeichnet, daß zwei der acht Adressenmöglichkeiten durch die Adressen des Busses geliefert werden, der die Verwaltungsschaltung mit dem Zentralprozessor (81) verbindet, die durch einen Zugriffszyklus des Zentralprozessors (CPU) auf den VRAM (83) gewählt werden.

13. Datenendgerät nach Anspruch 12, dadurch gekennzeichnet, daß zwei weitere der acht Möglichkeiten einerseits die Ausgangssignale eines 8-Bit-Zählers (85475), der durch das einen neuen Rahmen anzeigende Signal (NF) auf Null zurückgesetzt und bei jeder neuen Reihe des angezeigten Zeichens inkrementiert wird, und andererseits die Ausgangssignale eines Pufferregisters (8549) sind, das am Eingang 8 Adressenbits empfängt, die vom Zentralprozessor geliefert werden und bei jeder neuen Zeichenreihe die Anfangsadresse der Zeigertabelle (8301) definieren, wobei die entsprechende Möglichkeit durch einen Aufrufzyklus zum Laden der Adresse des Zeigers der momentanen Reihe ausgewählt wird.

14. Datenendgerät nach Anspruch 13, dadurch gekennzeichnet, daß zwei weitere der acht Möglichkeiten die 8 niedrigen Adressenbits und die 8 hohen Adressenbits des Zeigers der momentanen Reihe sind, die durch die Ausgangssignale einer Register-Pipeline (85473) gebildet sind, die durch einen Datenübertragungszyklus zum Laden der Adresse der momentanen Reihe in den VRAM vor jedem Beginn einer neuen Bildschirmzeile und vor der Leerung des Serialisierers des VRAM ausgewählt werden.

15. Datenendgerät nach Anspruch 14, dadurch gekennzeichnet, daß zwei weitere der acht Möglichkeiten die 8 niedrigen Adressenbits und die 8 hohen Adressenbits eines Zeiger-Zählers (85470, 85471) sind, der vor jedem Beginn einer Bildschirmzeile mit der Adresse des Zeigers der momentanen Reihe geladen wird, wobei die Zählung um eine Einheit vorauseilt, um die Adresse der folgenden physikalischen Reihe des VRAM zu definieren, wenn die Vergleichsschaltung (85476) ein Ende der physikalischen Reihe erfaßt und deswegen einen Datenübertragungszyklus in Echtzeit auslöst.

16. Datenendgerät nach einem der vorangehenden Ansprüche, dadurch gekennzeichnet, daß der dynamische Speicher (830) einerseits die Unterbrechungsvektoren, die Stapelverwaltungsregister und die Zeilenpuffer und andererseits eine Zeigertabelle (8301) enthält.

17. Verwaltungsschaltung für einen Videospeicher, einen Schreib-Lese-Speicher zur Zeichenerzeugung und die Anzeige eines Datenendgeräts, dadurch gekennzeichnet, daß sie in einer monolithischen integrierten Schaltung Verwaltungsschaltungen (8556) für Lese- und Schreibzugriffe auf den Videospeicher, einen Automaten (85477) zur Steuerung der Zugriffszyklen, der Auffrischung, der Datenübertragung und der seriellen Verschiebung des Videospeichers, eine Steuerschaltung (8553), die die für den Betrieb des Schreib-Lese-Speichers (82) zur Zeichenerzeugung notwendigen Signale CS, WE, OE liefert, sowie eine Attribut-Kontrollschaltung enthält, die mit einer ersten Pufferschaltung (8503 bis 8506) zum Speichern des Codes und des Attributs eines momentanen Zeichens, das vom Videospeicher stammt, um das Attribut jedes Zeichens zur Attribut-Kontrollschaltung (853) zu schicken, und mit einer zweiten Pufferschaltung (8520 bis 8523) zum Speichern der das Muster eines Zeichens bildenden Daten, die vom Schreib-Lese-Speicher (82) zur Zeichenerzeugung stammen, um das Muster zur AttributSteuerschaltung (853) zu schicken, verbunden ist.

18. Verwaltungsschaltung für einen Videospeicher, einen Schreib-Lese-Speicher zur Zeichenerzeugung und die Anzeige eines Datenendgeräts nach Anspruch 17, dadurch gekennzeichnet, daß sie einen Musterzähler (ech-motif), der in Abhängigkeit von der Anzahl der Halbbytes pro Muster parametrisiert ist, wobei die Muster zwischen 9 und 15 Pixel pro Zeichenscheibe enthalten, sowie einen Zähler (8551) für Zeichenscheiben enthält, der mit 1 bis 16 (8508) parametrisierbar ist, dessen Ausgang dem Zeichencode und einem zwischen 0 und 3 parametrisierbaren Halbbyte-Zähler (8552) zugeordnet ist, um die Adresse des Musters in der Zeichenerzeugungseinrichtung zu liefern.

19. Verwaltungsschaltung für einen Videospeicher, einen Schreib-Lese-Speicher zur Zeichenerzeugung und die Anzeige eines Datenendgeräts nach Anspruch 2 oder 3, dadurch gekennzeichnet, daß der Automat (85477, 8557) die Verwaltung von 1 bis 132 Spalten und von 1 bis 512 Zeilen pro Bildschirm ermöglicht.

20. Verwaltungsschaltung für einen Videospeicher, einen Schreib-Lese-Speicher zur Zeichenerzeugung und die Anzeige eines Datenendgeräts nach einem der Ansprüche 17 bis 20, dadurch gekennzeichnet, daß die Anzeige-Verwaltungsschaltung (85) Mittel enthält, um einerseits ein erstes Signal HOLD zu liefern, das einem Ersuchen um Übernahme der Kontrolle des Busses entspricht, und um andererseits ein zweites Signal HOLDA zu empfangen und zu verarbeiten, das die Verwaltung der Austauschvorgänge mit der externen Schaltung (81) während des kritischen Zeitpunkts des Ladens des Serialisierers des VRAM ermöglicht, um zu verhindern, daß eine externe Schaltung auf den VRAM zugreift; wodurch die Sperre des Zugriffs auf diesen VRAM während der Übertragung einer Reihe im Serialisierer aufgehoben ist.

21. Verwaltungsschaltung für einen Videospeicher, einen Schreib-Lese-Speicher zur Zeichenerzeugung und die Anzeige eines Datenendgeräts nach einem der Ansprüche 17 bis 20, dadurch gekennzeichnet, daß die Schaltung, die die Speicherung des Codes und des Attributs eines Zeichens ermöglicht, eine Pipeline ist, die aus einem ersten Satz von seriellen Pufferregistern (8500 bis 8503) sowie aus einem zweiten Satz (8504 und 8506) von Pufferregistern gebildet ist, welche jeweils am Ausgang eines Registers des ersten Satzes angeschlossen sind und im Takt des Signals eines Modulo-n-Zählers geladen werden, wobei n die Anzahl der Register des ersten Satzes ist.

22. Verwaltungsschaltung für einen Videospeicher, einen Schreib-Lese-Speicher zur Zeichenerzeugung und die Anzeige eines Datenendgeräts nach einem der Ansprüche 17 bis 21, dadurch gekennzeichnet, daß die Verwaltungsschaltung einen Zeiger-Zähler (85471) enthält, dessen Auslösung in bezug auf das Laden der Adresse der momentan verarbeiteten Reihe im voraus erfolgt.

23. Verwaltungsschaltung für einen Videospeicher, einen Schreib-Lese-Speicher zur Zeichenerzeugung und die Anzeige eines Datenendgeräts nach einem der Ansprüche 17 bis 22, dadurch gekennzeichnet, daß die Verwaltungsschaltung (85) eine Adressierungs-Verwaltungsschaltung (85472) enthält, die ermöglicht, die Datenübertragungen vom Speicher zur Verwaltungsschaltung (85) entsprechend der Folge der Signale, die von der Steuerschaltung (85477) für die Zugriffszyklen und für die Verschiebung geschickt werden, entweder über den parallelen Bus (8546) oder über den seriellen Bus (8548) des Videospeichers vorzunehmen.

24. Verwaltungsschaltung für einen Videospeicher, einen Schreib-Lese-Speicher zur Zeichenerzeugung und die Anzeige eines Datenendgeräts nach Anspruch 23, dadurch gekennzeichnet, daß die Adressierungs-Verwaltungsschaltung (85472) einen Multiplexierer (854720) mit einem 8-Byte-Eingang und einem Ausgang mit 9 Leitungen für 8 Adressenmöglichkeiten entsprechend den von der Kontroll- und Steuerschaltung (8557) der Adressierungsschaltung in Abhängigkeit vom gewählten Zugriffszyklus gelieferten Signalen enthält.

25. Verwaltungsschaltung für einen Videospeicher, einen Schreib-Lese-Speicher zur Zeichenerzeugung und die Anzeige eines Datenendgeräts nach Anspruch 24, dadurch gekennzeichnet, daß zwei der acht Adressenmöglichkeiten durch die Adressen des Busses, der die Verwaltungsschaltung mit einem Zentralprozessor (81) verbindet, geliefert werden, die durch einen Zugriffszyklus des Zentralprozessors (CPU) auf den VRAM (83) ausgewählt werden.

26. Verwaltungsschaltung für einen Videospeicher, einen Schreib-Lese-Speicher zur Zeichenerzeugung und die Anzeige eines Datenendgeräts nach Anspruch 25, dadurch gekennzeichnet, daß zwei weitere der acht Möglichkeiten einerseits die Ausgangssignale eines 8-Bit-Zählers (85475), der durch das einen neuen Rahmen angebende Signal (NF) auf Null zurückgesetzt und bei jeder neuen Reihe des angezeigten Zeichens inkrementiert wird, und andererseits die Ausgangssignale eines Pufferregisters (8549) sind, das am Eingang 8 Adressenbits empfängt, die vom Zentralprozessor geliefert werden und bei jeder neuen Zeichenreihe die Anfangsadresse der Zeigertabelle (8301) definieren, wobei die entsprechende Möglichkeit durch einen Aufrufzyklus zum Laden der Adresse des Zeigers der momentanen Reihe ausgewählt wird.

27. Verwaltungsschaltung für einen Videospeicher, einen Schreib-Lese-Speicher zur Zeichenerzeugung und die Anzeige eines Datenendgeräts nach Anspruch 26, dadurch gekennzeichnet, daß zwei weitere der acht Möglichkeiten die 8 niedrigen Adressenbits und die 8 hohen Adressenbits des Zeigers der momentanen Reihe sind, die durch die Ausgangssignale einer Registerpipeline (85473) gebildet sind, die durch einen Datenübertragungszyklus zum Laden der Adresse der momentanen Reihe in den VRAM vor jedem Beginn einer neuen Bildschirmzeile und vor der Leerung des Serialisierers des VRAM ausgewählt werden.

28. Verwaltungsschaltung für einen Videospeicher, einen Schreib-Lese-Speicher zur Zeichenerzeugung und die Anzeige eines Datenendgeräts nach Anspruch 27, dadurch gekennzeichnet, daß zwei weitere der acht Möglichkeiten die 8 niedrigen Adressenbits und die 8 hohen Adressenbits eines Zeiger-Zählers (85470, 85471) sind, der vor jedem Beginn einer Bildschirmzeile mit der Adresse des Zeigers der momentanen Reihe geladen wird, wobei die Zählung um eine Einheit vorauseilt, um die Adresse der folgenden physikalischen Reihe des VRAM zu definieren, wenn die Vergleichsschaltung (85476) ein Ende der physikalischen Reihe erfaßt und deswegen einen Datenübertragungszyklus in Echtzeit auslöst.

## Claims

1. A terminal comprising a microprocessor (81), a VRAM video memory (83), a character-generating random access memory (82) and a management circuit (85), characterised in that said management circuit (85) manages on the one hand the video display and, on the other hand, reading or writing access to the VRAM video memory (83), which constitutes on the one hand the system memory for storing the code necessary for the functioning of the terminal and, on the other hand, the memory of the display for storing the code and attributes of the characters to be displayed; said management circuit (85) being connected on the one hand, via a first data bus (8549) and a first address bus (8558), to the microprocessor (81), via a parallel data bus (8546) and a serial data bus (8548) to the VRAM video memory (83) and, on the other hand, via a second address bus (8528) and a second data bus (8529) to a character-generating random access memory (82) and via five output lines to the video monitor (8530, HRTL, VRT).

2. A terminal according to Claim 1, in which the management circuit (85) comprises, apart from the circuits (8556) for managing the reading and writing access to the video memory and the circuits (85477) controlling the access cycles and the serial offsetting of the video memory, a circuit (8503 to 8506) making it possible to store the code and the attribute of a current character in order to send the attributes over the attribute controller circuit (853), a circuit (8520 to 8523) making it possible to store the data constituting the pattern of a character coming from the character-generating random access memory (82).

3. A terminal according to Claim 2 characterised in that the circuit allowing the current pattern to be stored is a pipeline constituted of four buffer registers (8520 to 8523) in series and the outputs of which are sent to the inputs of the attribute controller circuit (853) as a function of the signal supplied by a pattern counter (ech-motif) assigned parameters as a function of the number of four-bit bytes per pattern, these patterns comprising between 9 and 15 pixels per slice of character.

4. A terminal according to Claim 2 or 3, characterised in that the circuit comprises an automatic controller (85477, 8557) that allows 1 to 132 columns and 1 to 512 lines per screen to be managed.

5. A terminal according to Claim 4, characterised in that the automatic controller (85477) manages the signals interfacing with the VRAM video random access memory, while supplying the signals RAS, GAS, DT, OE that are necessary for the functioning of this memory, particularly for refreshment and data transfer, as well as the parallel-to-serial conversion signals for the static RAM part.

6. A terminal according to Claim 2 or 5, characterised in that a counter (8551) of character slices capable of being assigned parameters from 1 to 16 (8508) is used in combination with the code of the character, and with a counter (8552) of four-bit bytes capable of being assigned parameters between 0 and 3 to supply the address of the pattern in the character generator, and in that a control circuit (8553) supplies the signals CS, WE, OE necessary for the functioning of the random access memory (82) storing characters.

7. A terminal according to one of the preceding claims, characterised in that the display management circuit (85) comprises means HOLD, HOLDA for managing exchanges with the microprocessor (81) during the critical moment of loading the parallel-to-serial converter of the VRAM, this being in order to prevent the microprocessor from gaining access to the VRAM; disputes over access to this VRAM between the microprocessor and the video being resolved accordingly while a row is being transferred to the parallel-to-serial converter.

8. A terminal according to Claim 2, characterised in that the circuit allowing the code and the attribute of a character to be stored is a pipeline constituted by a first set of buffer registers (8500 to 8503) in series and a second set (8504 and 8506) of buffer registers each connected respectively as an output of a register of the first set and loaded at the rate of the signal from a modulo-n counter, n being the number of registers in the first set.

9. A terminal according to one of the preceding claims, characterised in that the management circuit comprises a pointer counter (85471) which is triggered in advance of the loading of the address of the row currently being processed.

10. A terminal according to one of the preceding claims, characterised in that the management circuit (85) comprises an addressing management circuit (85472) allowing data transfers to be made from the memory to the management circuit (85), either via the parallel bus (8546), or via the serial bus (8548) depending on the sequence of signals sent by the circuit (85477) controlling the access cycles and the offsetting.

11. A terminal according to Claim 10, characterised in that the addressing management circuit (85472) comprises a multiplexer (854720) with 8 input bytes and a 9-line output among eight possible addresses depending on the signals supplied by the circuit (8557) for monitoring and controlling the addressing circuit as a function of the chosen access cycle.

12. A terminal according to Claim 11, characterised in that two of the eight possible addresses are supplied by the addresses of the bus connecting the management circuit to the central processor (81), said addresses being selected by a cycle of central processor (CPU) access to the VRAM (83).

13. A terminal according to Claim 12, characterised in that two others of the eight possibilities are respectively, on the one hand, the outputs of an 8-bit counter (85475) reset to zero by the signal (NF) indicating a new frame and incremented with each new character row displayed and, on the other hand, the outputs of a buffer register (8549) receiving as an input 8 address bits supplied by the central processor and defining the start-of-pointer-table address (8301) at each new row of characters, and selected by a call cycle in order to load the address of the current-row pointer.

14. A terminal according to Claim 13, characterised in that two others of the eight possibilities are the 8 low address bits and 8 high address bits of the current-row pointer constituted by the outputs of a register pipeline (85473) selected by a data transfer cycle to load the current-row address into the VRAM before each start of new screen line, this being before the parallel-to-serial converter of the VRAM is emptied.

15. A terminal according to Claim 14, characterised in that two others of the eight possibilities are the 8 low address bits and 8 high address bits of a pointer counter (85470, 85471) loaded before each start of screen line by the address of the current-row pointer with counting anticipated by one unit in order to define the address of the following physical row of the VRAM when the comparison circuit (85476) detects an end of physical row and hence triggers a data transfer cycle in real time.

16. A terminal according to one of the preceding claims characterised in that the dynamic memory (830) contains on the one hand the interrupt vectors, the stack management registers and the line buffers and, on the other hand, a pointer table (8301).

17. A circuit for managing a video memory, a character-generating random access memory and the display of a terminal, characterised in that it comprises, in a monolithic integrated circuit, circuits (8556) for managing read and write access to the video memory, an automatic controller (85477) controlling the access, refreshment, data transfer and serial offsetting cycles of the video memory, a control circuit (8553) supplying the signals CS, WE, OE necessary for the functioning of the character-generating random access memory (82), an attribute-monitoring circuit connected to a first buffer circuit (8503 to 8506) for storing the code and the attribute of a current character, coming from the video memory, in order to send the attribute of each character over the attribute controller circuit (853), a second buffer circuit (8520 to 8523) for storing the data constituting the pattern of a character, coming from the character-generating random access memory (82), in order to send the pattern to the attribute controller circuit (853).

18. A circuit for managing a video memory, a character-generating random access memory and the display of a terminal according to Claim 17, characterised in that it comprises a counter (ech-motif) of patterns assigned parameters as a function of the number of four-bit bytes per pattern, the patterns comprising between 9 and 15 pixels per slice of character, a counter (8551) of character slices capable of being assigned parameters from 1 to 16 (8508), the output of which is associated with the code of the character and with a counter (8552) of four-bit bytes capable of being assigned parameters between 0 and 3 in order to supply the address of the pattern in the character generator.

19. A circuit for managing a video memory, a character-generating random access memory and the display of a terminal according to Claim 2 or 3, characterised in that the automatic controller (85477, 8557) makes it possible to manage 1 to 132 columns and 1 to 512 lines per screen.

20. A circuit for managing a video memory, a character-generating random access memory and the display of a terminal according to one of Claims 17 to 20, characterised in that the circuit (85) for managing the display comprises means, on the one hand, for supplying a first signal HOLD corresponding to a request to take over control of the bus and, on the other hand, to receive and process a second signal HOLDA making it possible to manage exchanges with the external circuit (81) during the critical moment of loading the parallel-to-serial converter of the VRAM, this being in order to prevent an external circuit from gaining access to the VRAM; disputes over access to this VRAM being resolved accordingly while a row is being transferred to the parallel-to-serial converter.

21. A circuit for managing a video memory, a character-generating random access memory and the display of a terminal according to one of Claims 17 to 20, characterised in that the circuit allowing the code and the attribute of a character to be stored is a pipeline constituted by a first set of buffer registers (8500 to 8503) in series and a second set (8504 and 8506) of buffer registers each connected respectively as an output of a register of the first set and loaded at the rate of the signal from a modulo-n counter, n being the number of registers in the first set.

22. A circuit for managing a video memory, a character-generating random access memory and the display of a terminal according to one of Claims 17 to 21, characterised in that the management circuit comprises a pointer counter (85471) which is triggered in advance of the loading of the address of the row currently being processed.

23. A circuit for managing a video memory, a character-generating random access memory and the display of a terminal according to one of Claims 17 to 22, characterised in that the management circuit (85) comprises an addressing management circuit (85472) allowing data transfers to be made from the memory to the management circuit (85), either via the parallel bus (8546), or via the serial bus (8548) of the video memory depending on the sequence of signals sent by the circuit (85477) controlling the access cycles and the offsetting.

24. A circuit for managing a video memory, a character-generating random access memory and the display of a terminal according to Claim 23, characterised in that the addressing management circuit (85472) comprises a multiplexer (854720) with 8 input bytes and a 9-line output among eight possible addresses depending on the signals supplied by the circuit (8557) for monitoring and controlling the addressing circuit as a function of the chosen access cycle.

25. A circuit for managing a video memory, a character-generating random access memory and the display of a terminal according to Claim 24, characterised in that two of the eight possible addresses are supplied by the addresses of the bus connecting the management circuit to a central processor (81), said addresses being selected by a cycle of central processor (CPU) access to the VRAM (83).

26. A circuit for managing a video memory, a character-generating random access memory and the display of a terminal according to Claim 25, characterised in that two others of the eight possibilities are respectively, on the one hand, the outputs of an 8-bit counter (85475) reset to zero by the signal (NF) indicating a new frame and incremented with each new character row displayed and, on the other hand, the outputs of a buffer register (8549) receiving as an input 8 address bits supplied by the central processor and defining the start-of-pointer-table address (8301) at each new row of characters, and selected by a call cycle in order to load the address of the current-row pointer.

27. A circuit for managing a video memory, a character-generating random access memory and the display of a terminal according to Claim 26, characterised in that two others of the eight possibilities are the 8 low address bits and 8 high address bits of the current-row pointer constituted by the outputs of a register pipeline (85473) selected by a data transfer cycle to load the current-row address into the VRAM before each start of new screen line, this being before the parallel-to-serial converter of the VRAM is emptied.

28. A circuit for managing a video memory, a character-generating random access memory and the display of a terminal according to Claim 27, characterised in that two others of the eight possibilities are the 8 low address bits and 8 high address bits of a pointer counter (85470, 85471) loaded before each start of screen line by the address of the current-row pointer with counting anticipated by one unit in order to define the address of the following physical row of the VRAM when the comparison circuit (85476) detects an end of physical row and hence triggers a data transfer cycle in real time.
